Europäisches Patentamt

European Patent Office

Office européen des brevets

(19)

(11) **EP 1 394 690 A1**

(12) **EUROPEAN PATENT APPLICATION**

(43) Date of publication:
03.03.2004 Bulletin 2004/10

(51) Int Cl.⁷: **G06F 17/21**

(21) Application number: 02019106.0

(22) Date of filing: 29.08.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **SUN MICROSYSTEMS, INC.**
**Palo Alto, California 94303 (US)**

(72) Inventors:
• **Martens, Andreas**
**21035 Hamburg (DE)**
• **Meies, Frank**
**22049 Hamburg (DE)**
• **Tesch, Falko**
**22765 Hamburg (DE)**

(74) Representative: **HOFFMANN - EITLE**
**Patent- und Rechtsanwälte**
**Arabellastrasse 4**
**81925 München (DE)**

(54) **Behaviour of anchored frames**

(57) The invention relates to text processing applications including defining an anchored frame in a page having text information wherein a frame growth direction of the anchored frame is determined based on a text flow direction and line growth direction of the page. The frame growth direction is defined to be oriented away from an intersection of the page text flow direction and page line growth direction of the page, in order to minimally interfere with an existing layout of the page. If parameters of the page are changed, the anchored frame may be re-positioned and/or re-sized in order to conform with a changed page layout.

```
                    ┌─────────┐
                    │  START  │
                    └─────────┘
                         │
                         ▼
        ┌─────────────────────────────────┐   101
        │   DETERMINE A PAGE TEXT FLOW     │
        │      DIRECTION OF A PAGE         │
        └─────────────────────────────────┘
                         │
                         ▼
        ┌─────────────────────────────────┐   102
        │   DETERMINE A PAGE LINE GROWTH   │
        │      DIRECTION OF THE PAGE       │
        └─────────────────────────────────┘
                         │
                         ▼
        ┌─────────────────────────────────┐   103
        │   LOCATE AN ANCHOR POINT OF THE  │
        │       ANCHORED FRAME AT AN       │
        │   INTERSECTION OF THE PAGE TEXT  │
        │  FLOW DIRECTION AND THE PAGE LINE│
        │   GROWTH DIRECTION OF THE PAGE   │
        └─────────────────────────────────┘
                         │
                         ▼
        ┌─────────────────────────────────┐   104
        │ DEFINE A FRAME GROWTH DIRECTION  │
        │   OF THE ANCHORED FRAME TO BE    │
        │  ORIENTED AWAY FROM THE ANCHOR   │
        │             POINT                │
        └─────────────────────────────────┘
                         │
                         │              ──→ (A)
                         ▼
                    ┌─────────┐
                    │   END   │
                    └─────────┘
```

Fig. 1

EP 1 394 690 A1

**Description**

FIELD OF THE INVENTION

The present invention relates to defining an anchored frame in a page having text information.

TECHNOLOGICAL BACKGROUND

With continuously increasing processing capabilities of computing devices and increased proliferation of computers in offices and homes, computers became valuable assistants in nearly all application environments. For example, computer applications are widely used in the field of information processing, including applications for generating or processing text documents, applications for layout and design of documents; spreadsheet applications with text elements, applications for web page design and similar.

In any of the above applications it may be required to arrange text portions or text frames in certain regions of a page, e.g. in a text frame associated with a particular page, including a paragraph or text portion or character. The text frame may be anchored in the page or in another frame. Accordingly, a document may contain a plurality of text regions or frames associated with one another for realizing a particular layout of a text document, a web page or similar.

A text frame may have a predefined or default initial size, e.g. if inserted into a page, and may be filled with information elements, e.g. characters or any other sequence of symbols and similar. Text information or symbols may be inputted through a keyboard, as known in the art. Depending on the size of the frame the size and amount of text or symbols, the text frame will slowly be filled until the entire area of the text frame is occupied. If thereafter further information is input into the frame, to avoid that text information will exceed the area of the frame must be equipped with a functionality to grow depending on the further amount of information inserted. For example, a text frame containing horizontal lines of text information, such as English or German, may be provided to grow in a downward direction, if a further line of text information is to be included.

Further, with the increased proliferation of computing devices and a growing use of communication networks allowing computers to exchange information, such as local area networks or wide are networks including the Internet, larger communities of users may access or provide information. It thus may be the case that documents are provided for or provided by users accustomed to different writing techniques.

For example, countries using the European writing style generally use characters arranged in horizontal lines in a left to right text flow direction. Further, consecutive lines are appended below previous lines and thus a text frame will generally grow in a downward direction, if further text lines are to be included. Further, text frames are generally anchored in an upper left corner of a page or text portion to be associated with the text frame.

However, the Arabic world is accustomed to a text flow direction from right to left in horizontal lines and further, various countries in Asia use a vertical writing or text flow direction with consecutive text columns arranged in a right to left direction. Thus, a first character will be at the upper right corner of a text portion. This applies for example to the Japanese writing style and the Chinese writing style.

Further, the Mongolian writing style adopts a vertical text flow direction with consecutive text columns arranged from left to right.

In the case of text styles differing from the European style with horizontal left to right text flow direction, anchoring frames or placing frames into text portions may cause problems, if a downward growth direction of the text frame according to the European style, is provided and/or if a text frame is anchored to an upper left corner of a text portion associated with the text frame.

Further, if different writing styles for example horizontal left to right and vertical are combined on pages, a predefined growth direction of a text frame anchored or placed on a page may interfere with the text layout and may cause cumbersome rearrangements of the layout of the page to adapt the layout of the page to the combination of individual writing styles.

These above problems are particularly prominent in a network environment, where a text processing application is designed to accommodate a plurality of writing styles for use by a plurality of different users.

The above problems, however, also occur if an application adapted to a plurality of writing styles is distributed using a data carrier and loaded onto computing devices operated by users having different writing style preferences.

SUMMARY OF THE INVENTION

It is therefore desirable to provide for a flexible and adaptable definition of text frames in documents.

According to an embodiment of the invention a method for defining an anchored frame in a page having text information includes: determining a page text flow direction of the pages; determining a page line growth direction of the page; locating an anchor point of the anchored frame at an intersection of the page text flow direction and the page line growth direction of the page; and defining a frame growth direction of the anchored frame to be oriented away from the anchor point. Accordingly, the frame growth direction of the anchored frame may be adapted to various combinations of text flow directions and line growth directions of an underlying page and of an anchored frame and an interference of a growing anchored frame with an existing layout of a page, other text frame or document may be avoided.

Advantageously, the frame growth direction may include at least one of a frame text flow direction and a frame line growth direction, i.e. a direction of the text in the frame and a direction for adding new text lines in the frame. Accordingly, for example if the anchored frame is filled and further text elements are included into the anchored frame, the frame may be provided to grow in line growth direction, i.e. the direction of subsequent lines of text information or may be provided to grow into text flow direction.

Further, it may be determined whether the page text flow direction of the page and a frame text flow direction of the anchored frame are orthogonal to one another, and, in this case, the frame growth direction of the anchored frame may be defined to have the same direction as the page text flow direction of the page. Thus, for example in the presence of a vertical direction of the text in the frame in the presence of horizontal text direction in the underlying page, an interference of the growing frame with the page may be avoided.

Still further, it may be determined whether the page text flow direction of the page and a frame text flow direction of the anchored frame are opposite to one another, and, in this case, the frame growth direction of the anchored frame may be defined to have the same direction as the page growth direction of the page. Thus, for example in the presence of a frame having right to left writing direction in a page having left to right writing direction, an interference of a growing frame with a page layout can be avoided.

Still further, the anchor point of the text frame may be located at a text origin of the page linked with the anchored frame. Accordingly, the anchored frame may be associated with a defined position in the page.

Still further, if at least one of the page text flow direction and page line growth direction of the pages changed, a new location of the anchor point may be determined based on a new page text direction and a new text growth direction of the page; and repositioning the anchor point to the new location. Accordingly, if for example after introduction of the anchored frame specification parameters of the underlying page are changed, the anchor point of the frame may be repositioned in accordance therewith for improved layout adaptation.

Further, the embodiment may include determining an anchor corner of the anchored frame located closest to the anchor point; defining a distance X1-distance of the anchored frame to the anchor corner in page text flow direction of the page; and positioning the anchor corner of the anchored frame in the distance X1-distance to the reposition anchor point in the new page text flow direction of the page.

Still further, an embodiment may include determining an anchor corner of the anchored frame located closest to the anchor point; defining a distance Y1-distance of the anchored frame to the anchor corner in page line growth direction of the page; and positioning the anchor corner of the anchored frame in the distance Y1-distance of the reposition anchor point in the new page line growth direction of the page. Accordingly, upon changing parameters of the page associated with the anchored frame, the anchored frame may be repositioned in accordance with the changes, in order to improve an adaptation of a layout of the page. At least one of the distances X1 and Y1 may be modified.

Further, a fixed position of the anchored frame may be defined based on one of the page text flow direction and the page line growth direction; and the fixed position may be redefined based on the new page text flow direction and the new page line growth direction. Thus, if a frame is for example defined to be at the centre portion of the page in horizontal or vertical viewing direction, this fixed position may be redefined based on the changes of the underlying page.

If at least one of the page text flow direction and page line growth direction of the page is changed, it may be provided for maintaining unchanged at least one of: - a height dimension; - a width dimension; and - a frame growth direction of the anchored frame. Accordingly, upon changing the parameters of the page, parameters of the anchored frame may at least partially be maintained.

Further, it may be determined whether the frame growth direction of the anchored frame is opposite to at least one of the new page text direction of the page and the new page line growth direction of the page, and, in this case, the frame growth direction may be reversed. Thus, an interference of the frame growth direction with the existing layout of the page may be avoided.

If the text flow direction of the anchored frame is changed, it may be provided for maintaining unchanged at least one of - a height dimension; - a width dimension; and - a frame growth direction of the anchored frame. Thus, if the parameters of the frame are changed, at least one of the parameters of the frame may be maintained unchanged, in order to avoid undesired layout changes.

If the text flow direction of the anchored frame is changed, a new frame text flow direction of the anchored frame may be specified and a new frame growth direction of the anchored frame may be provided; and it may be determined whether the new frame growth direction of the anchored frame is opposite to at least one of the page text direction and page line growth direction of the page and, in this case, the frame growth direction may be reversed. Accordingly, upon changing parameters of the page, an interference of the frame with the existing layout of the page may be avoided.

According to another embodiment, if the distance Y1-distance exceeds a page limit of a first page, a distance Y2-distance is calculated by subtracting from the distance Y1-distance the distance from the anchor point on the first page to the page limit of the first page; a second anchor point is positioned on a second page such that an offset from a text origin in a page text flow direction on the second page corresponds to the offset of the first anchor point from a text origin in a page text flow direction on the first page and with substantially no offset from the text origin in a page line growth direction on the second page; and the anchored frame is located in the distance X1-distance from the second anchor point in a page text flow direction of the second page and the Y2-distance from the second anchor point in a page line growth direction of the second page. Accordingly, for improved layout a growing frame may be repositioned to a second page.

According to another embodiment, if a frame grows over a page limit of a first page in page line growth direction, a second anchor point is positioned on a second page such that an offset from a text origin in a page text flow direction on the second page corresponds to the offset of the first anchor point from a text origin in a page text flow direction on the first page and with substantially no offset from the text origin in a page line growth direction on the second page; and a remainder of the anchored frame exceeding the first page is located in the distance X1-distance from the second anchor point in a page text flow direction of the second page and a distance of substantially zero from the second anchor point in a page line growth direction of the second page. Accordingly, the frame may be suitably located on the second page, to support a suitable layout of the page.

Moreover, a current width of the anchored frame in page text flow direction of the page may be determined; a current height of the anchored frame in page line growth direction may be determined; and the anchored frame may be positioned on the second page with the current width in text flow direction of the second page and the current height in line growth direction of the second page. Accordingly, the moved anchored frame may be smoothly fit into the existing layout of the second page.

The page text flow direction and the page growth direction may be determined by the text flow direction of the page, a paragraph, and a character string of the page link with the anchored frame. Still further, the anchored frame may inherit at least one of the frame text flow direction and the frame line growth direction from the page.

The page may be constituted by one of an anchored frame, a paragraph a character, a symbol and similar. Thus, the page may be any kind of text element for anchoring the anchored frame.

According to another example, a program may be provided having instructions to cause data processing means to carry out at least one of the above operations.

Further, a computer readable medium may be provided in which a program is embodied were the program is to make a computer execute at least one of the above operations. Still further, a computer program product may be provided comprising the computer readable medium. A data stream or a data structure may have instructions adapted to cause data processing means to carry out at least one of the above operations.

According to another example, a processing unit for defining an anchored frame in a page having text information may include means for determining a page text flow direction of the page and a page line growth direction of the page; means for locating an anchor point of the anchored frame at an intersection of the page text flow direction and the page line growth direction of the page; and means for defining a frame growth direction of the anchored frame to be oriented away from the anchor point.

Further embodiments of the invention are disclosed in further claims.

BRIEF DESCRIPTION OF THE DRAWINGS

Fig. 1          shows operations of a method for defining an anchored frame in a page having text information according to an embodiment of the invention;

Fig. 2a and 2b    show examples of anchored frames in a page having text information according to embodiments of the invention;

Fig. 3          shows operations of a method of defining an anchored frame in a page having text information according to another embodiment of the invention, e.g. as applicable in the presence of vertical writing;

Fig. 4a - 4h     show examples of anchored frames in a page according to further embodiments of the invention, particularly illustrating frame growth directions in the presence of combinations of different writing style in the page and frame;

Fig. 5      shows operations for defining an anchored frame in a page having text information according to another embodiment of the invention, particularly applicable to cases of right to left writing;

Fig. 6a and 6b      show examples of anchored frames in a page according to further embodiments of the invention, illustrating further combinations of writing styles in the page and frame;

Fig. 7      shows operations for defining an anchored frame in a page having text information according to another embodiment of the invention, particularly illustrating relocating an anchor point based on changes of the text flow direction and/or line growth direction of the page;

Fig. 8      graphically illustrates relocating an anchor point according to another embodiment of the invention;

Fig. 9      illustrates operations for defining an anchored frame according to another embodiment of the invention, particularly illustrating relocating the anchored frame upon changes of the text flow direction and/or line growth direction of the page;

Fig. 10      graphically illustrates a relocation of the anchored frame upon changing the page parameters according to another embodiment of the invention;

Fig. 11      shows operations for defining an anchored frame in a page according to another embodiment of the invention, particularly illustrating a case with reversed frame growth directions;

Fig. 12      shows operations for defining an anchored frame in a page having text information according to a another embodiment of the invention, particularly illustrating a modified frame growth direction based on a change of the text flow direction of the anchored frames;

Fig. 13      shows operations for defining an anchored frame in a page according to another embodiment of the invention, particularly illustrating relocating an anchored frame from one page to another;

Fig. 14      shows operations for defining an anchored frame in a page according to another embodiment of the invention, particularly illustrating modifying an orientation of an anchored frame after moving the frame to a second page;

Fig. 15      graphically illustrates steps for moving an anchored frame from one page to another according to another embodiment of the invention; and

Fig. 16      shows operations for defining an anchored frame in a page according to another embodiment of the invention, particularly illustrating relocating a part of an anchored frame exceeding a page limit;

Fig. 17      illustrates elements of a system for defining an anchored frame in a page having text information according to another embodiment of the invention, particularly illustrating a network environment.

DETAILED DESCRIPTION OF THE PREFERED EMBODIMENTS

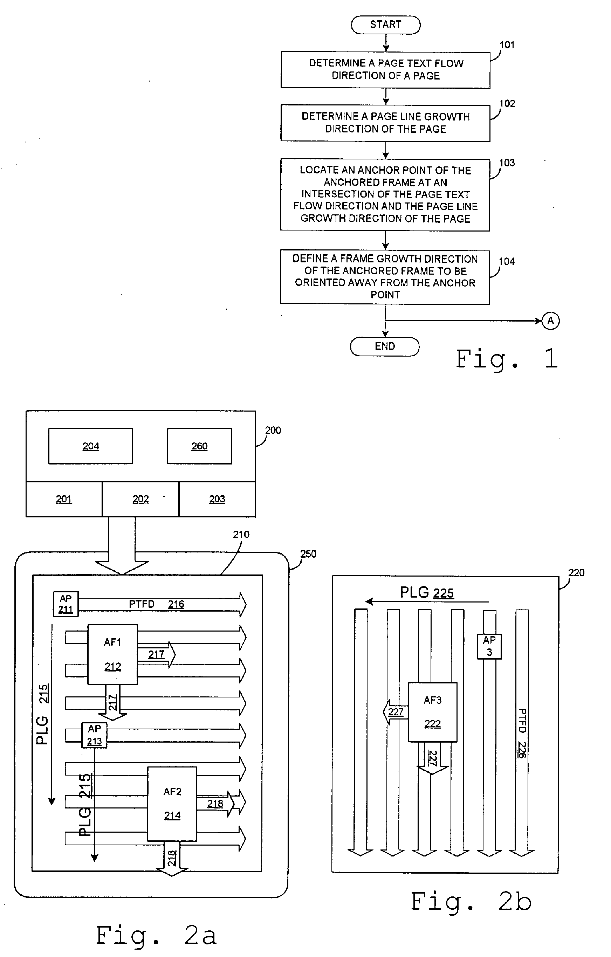

A first embodiment of the invention will be described with respect to Fig. 1.
Fig. 1 shows operations for defining an anchored frame in a page having text information according to an embodiment of the invention. The embodiment allows adapting a frame growth direction of an anchored frame in a page, if for example the text in the frame exceeds the area of the frame. The frame may then be allowed to grow in a specified frame growth direction. The frame may be adapted to various requirements, such as different writing styles in the page and/or different writing styles in the page and anchored frame. For example, the growth direction of the anchored frame may be defined based on a writing style of the page such as a text flow direction from left to right, in a vertical direction and similar.
The anchored frame may be defined using a specifically adapted text processing application, such as any application for generating or processing text documents or documents including text, such as text processes, spreadsheet applications, web pages or programs for the layout of web pages or text documents. Alternatively, the anchored frame may be defined using a separate entity cooperating with a text processing application.
In the following operations for defining an anchored frame according to the present embodiment will be outlined.

In a first operation 101 the page text flow direction of the page is determined. The page text flow direction of the page preferably is the direction of sequentially arranging characters or symbols in lines. For example, according to the European writing style, such as in English or German, characters are sequentially arranged in a horizontal direction from a left position towards a right position and therefore a text flow direction in this case is left to right. As a further example, Japanese characters are arranged in a sequence from top to bottom of a page and thus the text flow direction of the page in this case is vertical downwards oriented.

An initial text flow direction may be determined based on settings of a text application program or a user operating a text processing application may determine a text flow direction according to preference.

To identify the text flow direction settings of a corresponding text application program may be determined or the actual arrangement of characters on a display may be determined.

In a second operation 102 a page line growth direction of the page is determined. The page line growth direction preferably is a direction of a sequence of consecutive lines containing text elements. For example, with a left to right writing style as for example in the German and English language, a page line growth direction would be downward oriented on the page, as a subsequent line containing text elements is placed below the lines already present. As the page text flow direction, the page line growth direction may be determined based on settings of an application or may be determined based on the actual arrangement of characters and lines on a display.

Thereafter, in an operation 103 an anchor point of the anchored frame is located at an intersection of the page text flow direction and the page line growth direction of the page. For example, an intersection of the page text flow direction and the page line growth direction may be a location where a first character of a page associated with the frame is placed, i.e. the origin of the page. Further, if the page text flow direction is perceived as a field of parallel vectors in a direction of a sequence of characters on the page, and if the page line growth direction is perceived as a field of parallel vectors in a direction of subsequent lines of text elements on the page, then the intersection may be located virtually at any location on the page, as an arbitrary one of the vectors for the page text flow direction and an arbitrary one of the vectors of the page line growth direction may be used to determine the intersection. For example, on a European style page with a left to right writing direction and a vertical downward oriented page line growth direction, the anchor point may be at the upper left corner of the page or at any other location within the page. The intersection of the text flow direction and line growth direction may be determined based on settings of the application, may involve user interaction and similar. Further, the operation for locating the anchor point may be automatically carried out or may involve user interaction, for example a user arranging an anchor point on a page. The anchor point may be a marker stored in association with the page, e.g. in a digital representation of the page, such as a text document stored in the form of a file on a storage device.

In a preferred embodiment, the anchor point may be located at a text origin of the page associated with the anchored frame. The text origin is the position of the first character on a page in accordance with a particular writing style. For example the text origin according to the European style is the upper left corner, according to the Arabic style the upper right corner, according to Japanese or Chinese the upper right corner, etc.

Thereafter, in an operation 104 a frame growth direction of the anchored frame is defined to be oriented away from the anchor point, e.g. upon insertion of further characters or based on a resizing command from a user, the frame may grow at a side turned away from the anchor point and in a direction oriented away from the anchor point. According to an embodiment, a growth direction of the anchored frame may have the same direction as a frame text flow direction of the frame or a direction opposite to the frame text flow direction of the frame, i.e. a direction of a sequence of characters within the anchored frame. However, it may be preferred that the frame growth direction is defined to have the same direction as a frame line growth direction or a direction opposite to the frame line growth direction, i.e. a direction of a sequence of lines within the text frame, if possible.

For example, in an anchored frame with left to right frame text flow direction, as for example in the German and English language, a frame growth direction would then be identical to the frame line growth direction, i.e. downward oriented.

By defining the frame growth direction of the anchored frame, i.e. a direction of enlarging the anchored frame, to be oriented away from the anchor point, it can be avoided that the anchored frame growth in a direction with a component opposite to at least one of the page line growth direction and page text flow direction of the underlying page.

Thus, layout problems can be avoided as an anchored frame never grows in a direction opposite to a page text flow or page line growth. This is particularly advantageous if for example vertical writing style or right to left writing style are used and/or combined with any other kind of writing style.

The above operations may be carried out in association with a text processing application such as outlined above, or may be provided in a separate software module assisting a text processing application.

With the above method, regardless of a writing style present, or a combination of writing styles of a page and anchored frame, a frame growth direction can always be determined to conform with a basic layout of the page, as the frame growth direction is always directed away from the anchor point located at the intersection of the page text flow direction and the page line growth direction.

In alternate embodiments, the page as outlined above may be constituted by a paragraph including text information, e.g. a paragraph of a text document. Further, the page as outlined above may be constituted by a character, or string of symbols or similar, i.e., the page itself may be constituted by any kind of text element of a text document. Still further, the page may itself be constituted by an anchored frame, i.e. an anchored frame may be anchored within another anchored frame, etc.

Still further, the page text flow direction and the page line growth direction may be determined by the text flow direction of one of the pages, a paragraph, a character string and any other text element used for linking the anchored frame.

The anchored frame, e.g. upon defining the anchored frame, e.g. through user interaction, may initially inherit at least one of the page text flow direction and page line growth direction from the page. I.e., upon initialising an anchored frame, the anchored frame may be defined based on the underlying page and may then be modified, if it is determined that the frame growth direction has a component in a direction opposite to at least one of the page line growth direction and page text flow direction of the page.

In the following a further embodiment of the invention will be outlined with respect to Figs. 2a and 2b.

Figs. 2a and 2b show elements of a system for defining an anchored frame in a page having text information according to another embodiment of the invention, particularly showing elements of a processing unit and schematically showing a possible display generated by or for a text processing application. The arrangement of Figs. 2a and 2b may be adapted to execute the operations shown in Fig. 1, however, Figs. 2a and 2b is not limited thereto.

Fig. 2a shows a data processing unit 200 including means for determining 201 a page text flow direction of a page and a page line growth direction of the page. The page text flow direction and page line growth direction may be as outlined with respect to Fig. 1.

Further, Fig. 2a shows means for locating 202 an anchor point of the anchored frame at an intersection of the page text flow direction and the page line growth direction of the page. Still further, the data processing unit 200 includes means for defining 203 a frame growth direction of the anchored frame to be oriented away from the anchor point.

Further, any kind of text processing application 204 may be provided within the data processing unit 200, as shown in Fig. 2a, or may alternatively be provided at an external location and be in communication with the data processing unit 200. Moreover, said means for determining 201, said means for locating 202 and said means for defining 203 may form an integral part of the text processing application 204, or may be maintained as separate functional entities assisting the text processing application 204.

For further illustration, Fig. 2a shows an example of a display including a page, e.g. as it may be displayed on a display unit 250 associated with the data processing unit 200. The display unit may for example be a CRT-type display unit, a TFT-type display unit or any other display unit as known in the art. The page, denoted 210, may be a page including information generated by the text processing application 204, e.g. under control by a user. The page may include text, images, video sequences, audio components and similar. As noted before, the page may also be constituted by a paragraph or character string or similar and does not need to be constituted by an entire page.

Moreover, the page may include different portions with different writing style, however, for sake of simplicity in the present example only one writing style of the page is illustrated.

Fig. 2a schematically illustrates an exemplary page with text information written according to the European writing style, i.e. a page text flow direction from left to right as indicated by the arrow 216. Still further, it is assumed that the page line growth direction, as indicated by arrow 215 is oriented in a downward direction, i.e., lines are appended consecutively in a downward direction.

The individual lines of the text do not necessarily contain text information, i.e. text characters, they may also be constituted by images and similar and by "empty" lines.

Still further, Fig. 2a shows a first anchor point 211 located in the upper left corner of the page 210, at an intersection of the page text flow direction 216 and the page line growth direction 215. The anchor point, even though shown in Fig. 2a for illustration, may be invisible in a practical case, maintained for defining a position of an anchored frame. As shown in the present case, the anchor point may be located at the text origin of the page.

Fig. 2a shows a first anchored frame 212 associated with the first anchored point 211. The first anchored frame 212 may be maintained in a fixed position and direction with regard to the first anchor point 211, as it will be outlined with respect to following embodiments.

According to the embodiment, the first anchored frame 212 may be defined to have a frame growth direction oriented away from the first anchor point 211, as shown in Fig. 2a by arrows 217 in downward and rightward direction. The frame may grow in one or both of the directions denoted 217.

The frame growth direction may be a frame text flow direction of the anchored frame or a frame line growth direction of the anchored frame. Preferably, for example if the first anchored frame 212 includes vertical text, such as Japanese characters, the frame growth direction will be selected to be directed to the right. Alternatively, if the first anchored frame 212 includes horizontal text with a text flow direction from right to left or left to right, the frame growth direction will preferably be downward oriented, as shown in Fig. 2a.

As a further example in Fig. 2a, a second anchor point 213 is shown located at an intersection of the page text flow direction 216 and the page line growth direction 215. A second anchored frame 214 is assumed to be associated with the second anchor point 213. The second anchored frame 214 may include text according to any existing writing style and will have a frame growth direction, i.e. a direction of growth if further text is included, as indicated by arrows 218, i.e. in a downward direction and/or a horizontal direction oriented to the right in the plane of the Fig. 2a.

Even though only two anchored frames are shown, an arbitrary number of frames may be provided, and, frames may be anchored within further anchored frames, as necessary. As the first anchored frame 212 and the second anchored frame 214 both have a frame growth direction 217 and 218 oriented away from the respective anchor point 211 and 213 and from the text origin, an interference with an existing layout of the page can be reduced. Further, as the frame growth direction may be determined automatically based on a position of the anchor point and the parameters of the underlying page, necessary user interaction for defining the parameters of the anchored frames can be reduced to a minimum.

Fig. 2b shows a further example of an anchored frame defined in a page having text information.

The page and anchored frame may also be provided and/or defined using the processing unit 200 of Fig. 2a.

Fig. 2b shows a second exemplary page 220, including text having a page text flow direction 226 in downward direction, e.g. as used in accordance with Chinese or Japanese writing style. Further, the page 220 is assumed to have a page line growth direction 225 towards the left, i.e., consecutive text columns will be appended in leftward direction.

A third anchor point 221 is located at an intersection of the page text flow direction 226 and the page line growth direction 225 and is associated with a third anchored frame 222 shown in Fig. 2b. In the present example the anchor point coincides with the text origin.

Further, in the present example the frame growth direction of the third anchored frame 222 is defined to be oriented away from the third anchor point 221, in order to minimally interfere with an existing layout of the page 220. The frame growth direction may be in a direction of one or both of the arrows 227 shown in Fig. 2b.

If the text origin of a page is assumed to be close to a position of a first character on the page, in the example of Fig. 2b the upper right corner, then it may be assumed that the anchor point is located closer to the text origin than the anchored frame. This has the effect of a more intuitive placing of anchored frames and anchor points on a page. However, it is also possible that the anchored frame is located closer to a text origin of an underlying page than the anchor point. In this case the above rule of defining a frame growth direction may be modified to a definition of the frame growth direction in a direction away from the text origin.

In the following the elements of the arrangement shown in Figs. 2a and 2b will be outlined in further detail. It is noted that the following shows examples only and should not be construed as limiting the scope of the invention.

The data processing unit 200 may be a general purpose computer, a desktop computer, a laptop computer, a palmtop computer or any other kind of computing device, including personal digital assistant (PDU) and mobile communication devices such as mobile telephones. The data processing unit may include a central processing unit and a memory for storing required software programs.

The means for determining 201 a page text flow direction and page line growth direction, said means for locating 202 an anchor point and said means for defining 203 a frame growth direction may be constituted by a sequence of coded instructions for execution on a central processing unit of the data processing unit 200. However, it is also possible that the means 201, 202 and 203 are at least partially realized as hardware components.

Coded instructions for executing the functionality of the means 201, 202 and 203 and/or the application 204 may be stored in a storage unit 260 provided within the data processing unit 200, as shown in Fig. 2a. However, alternatively, the storage unit may be provided at an external location, accessed from the data processing unit 200 via any kind of communication link.

The text processing application 204 may be constituted by a sequence of coded instructions provided at the data processing unit 200 for handling a text document and/or generating the layout of a text document, as outlined above. The coded instructions may also be stored in a storage unit, and may be retrieved by the central processing unit on demand. Moreover, the text processing application 204 and the means for determining 201, the means for locating 202 and the means for defining 203 may form a single application module for a group of application modules associated with one another.

Still further, it is possible that the text processing application is located at a remote location, e.g. on a further data processing unit, in communication with the data processing unit 200.

It is noted that a program or a group of programs may be provided having instructions adapted to cause a data processing device such as the data processing unit 200 or a group of data processing devices to carry out at least one of the above operations of the previous embodiments. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The computer-readable medium may be constituted by the data stream or the data structure. Still further, a computer program product may be provided comprising the computer-readable medium.

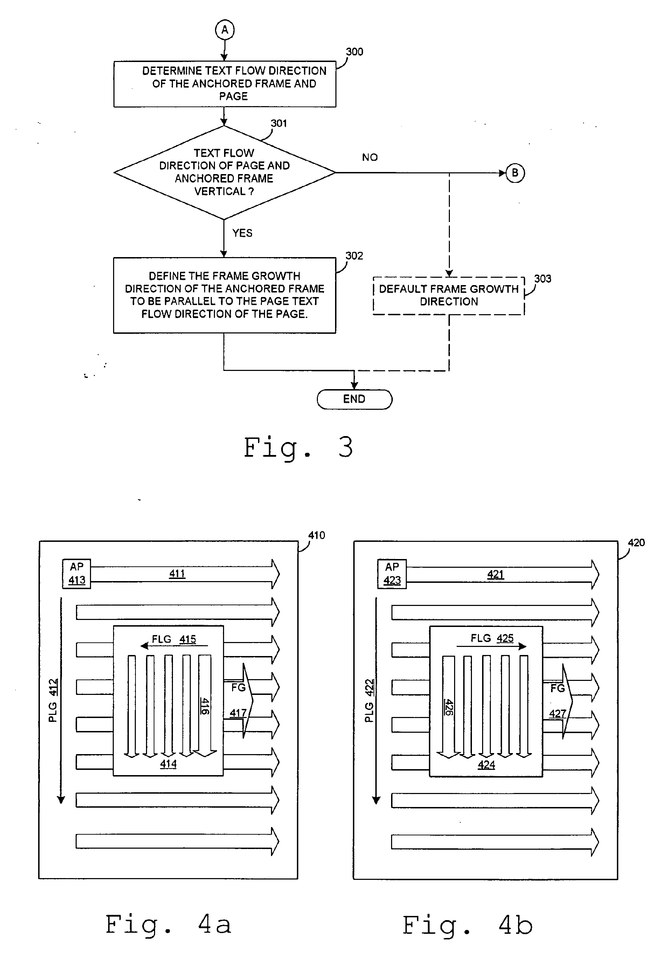

In the following a further embodiment of the invention will be described with respect to Fig. 3.

Fig. 3 shows a sequence of operations for defining an anchored frame in a page having text information according to another embodiment of the invention.

Fig. 3 particularly outlines operations to define an anchored frame in the presence of a vertical writing direction in at least one of'the frame and page.

Operations may start at an entry point A corresponding to an exit point A shown in Fig. 1, i.e. following operation 104. Accordingly, operations of Fig. 3 may be carried out subsequent to the operations 101 - 104 of Fig. 1, however, Fig. 3 is not limited thereto.

In a first operation 300 the text flow direction of the anchored frame and of the page is determined, e.g. as outlined with respect to previous embodiments.

In an operation 301 it is then determined whether a text flow direction of a page and an anchored frame are orthogonal to one another. This may be achieved by comparing corresponding settings defined in association with the page and the anchored frame. For example, the text flow direction of the page may be determined in association with a user preference and, the text flow direction of the anchored frame may be defined based on default setting for anchored frames, based on user preference and similar.

If in operation 301 the decision is "YES", i.e. if it is determined that the text flow direction of the page and the anchored frame are orthogonal to one another, in an operation 302 the frame growth direction of the anchored frame is defined to have the same direction as the page text flow direction of the page. This may be particularly advantageous, if vertical and horizontal writing styles are combined with one another.

If in operation 301 the decision is "NO", i.e. if it is determined that the text flow direction of the page and the anchored frame are not orthogonal to one another, a default frame growth direction may be determined in an operation 303. The default frame growth direction may be a preset frame growth direction for anchored frames or may be determined based on a line growth direction of the frame or may be determined based on a page line growth direction of the associated page.

In order to realize the above functionality, a data processing device such as the data processing unit 200 of Fig. 2a may be provided including means for determining whether the page text flow direction of the page and a frame text flow direction of the anchored frame are orthogonal to one another, and, in this case, for defining the frame growth direction of the anchored frame to have the same direction as the page text flow direction of the page. Said means for determining may be constituted by a sequence of coded instructions for execution on a central processing unit of the data processing unit 200 and/or may at least partially be realized as hardware components.

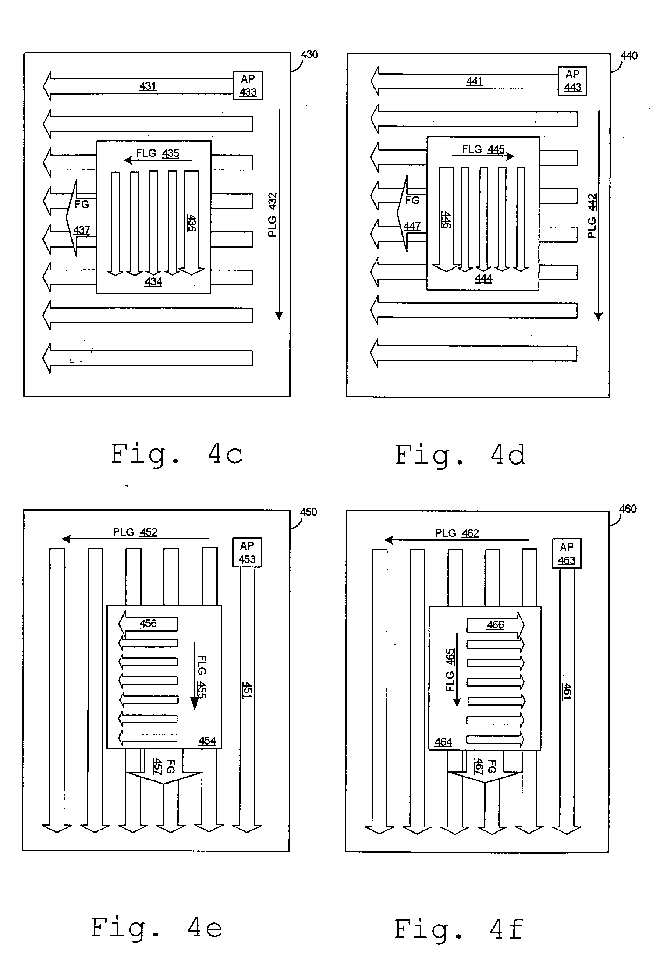

In the following further examples will be outlined with respect to Figs. 4a - 4h. The Figs. 4a - 4h show various practical examples of pages and anchored frames according to further embodiments of the invention.

The pages and frames of Figs. 4a - 4h may be generated using the method outlined with respect to Fig. 3, however, the embodiments are not limited thereto. The operations of Fig. 3 and the examples of Figs. 4a - 4h may be further realized using the arrangement including the data processing unit 200 of Fig. 2a, however, Figs. 3 and 4a - 4h are not limited thereto.

A first example of a page with a defined anchored frame according to an embodiment of the invention is shown in Fig. 4a.

A page 410 includes text in a horizontal left to right direction, i.e., the page text flow direction is as indicated by arrow 412. Further, the page 410 is assumed to have a page line growth direction 412 in downward direction in the plane of the drawing. Accordingly, the page may be written in a text style as common for the German or English language.

An anchor point 413 is assumed to be located at the text origin of the page 410, i.e. at an intersection of the page text flow direction 411 and the page line growth direction 412. However, in further examples, the anchor point may be located at other places within the page 410. An anchored frame 414 is assumed to be located as shown in the page, having text in a vertical direction such as according to Japanese or Chinese style.

Accordingly, characters are arranged beginning from a text origin in the upper right corner of the anchored frame 414 in a downward oriented direction, i.e. the frame text flow direction is in the direction of the arrows 416. The frame line growth direction of the anchored frame 415 is oriented towards the left in the plane of the drawing i.e. consecutive columns including text elements are arranged parallel to one another towards the left side of the figure. Further, a frame growth direction of the anchored frame 414 is defined in a direction away from the anchor point 413, as indicated by the arrow 417.

Thus, even though an intuitive frame growth direction in the present example would be towards the left, as consecutive columns'including text elements are appended towards the left in frame line growth direction 415, the frame growth direction 417 is defined to be oriented to the right, in order to avoid interference with an existing layout of the page.

In the following a further embodiment of the invention will be described with respect to Fig. 4b.

Fig. 4b shows an example of a page 420 with a page text flow direction 421 from left to right and a page line growth direction 422 in a direction oriented downward in the plane of the figure. Further, an anchor point 423 coinciding with the text origin of the page is shown in Fig. 4b.

An anchored frame 424 is shown to have a frame text flow direction 426 in a downward direction, i.e., the writing style is vertical. Further, the frame line growth direction of the frame as shown by the arrow 425 is assumed to be oriented towards the right, i.e. the first character of the anchored frame is located at the upper left corner, i.e. the text origin of the anchored frame is at the upper left corner in the frame. An example for a writing style of the anchored frame 424 is the Mongolian writing style, where columns of characters are placed consecutively in a direction towards the right in a writing plane.

In the example of Fig. 4b, the frame growth direction is defined in a direction located away from the anchor point/text origin towards the right, as indicated by an arrow 427.

Figs. 4a and 4b show examples of a preferably automatic definition of a frame growth direction of anchored frames in accordance with a page text flow direction of the page and a page line growth direction of the page.

In the following a further embodiment of the invention will be described with respect to Fig. 4c.

Fig. 4c shows a page 430 with a right to left writing direction, i.e. a page text flow direction is in accordance with the arrow 431. A page line growth direction of the page 430 is in a downward direction, as indicated by the arrow 432.

Further, in Fig. 4c an anchor point 433 is located at an intersection of the page line growth direction and the page text flow direction of the page 430. The anchor point 433 is assumed to coincide with the text origin of the page.

Fig. 4c shows an anchored frame 434 with a vertical frame text flow direction 436 and a frame line growth direction 435 towards the left, for example as used in accordance with the Japanese and Chinese writing style.

Again, the frame growth direction of the anchored frame is defined in a direction away from the anchor point/text origin in a direction towards the left, as shown by the arrow 437.

In the following a further embodiment of the invention will be described with respect to Fig. 4d.

Fig. 4d shows an example of a page 440 with a page text flow direction from right to left, as indicated by the arrow 441.

Accordingly, the page may be written in accordance with the Arabic style from right to left.

Further, the page 440 has a page line growth direction 442 in downward direction and an anchor point 443 is located at the text origin, i.e. an intersection of the page line growth direction 442 and the page text flow direction 441.

An anchored frame 444 with vertical text is assumed to have a frame line growth direction 445 towards the right and a frame text flow direction 446 downwards, as used in accordance with for example the Mongolian writing style.

A frame growth direction of the anchored frame 444 is defined towards the left, i.e. oriented away from the anchor point/text origin of the page, towards the left, as indicated by the arrow 447.

In the following a further embodiment of the invention will be described with respect to Fig. 4e.

Fig. 4e shows an example of a page 450 having text in accordance with the vertical writing style, such as Chinese or Japanese.

A page text flow direction 451 is indicated in a downward direction and a page line growth direction 452 is oriented towards the left.

An anchor point 453 is located at the text origin, i.e. an intersectional page line growth direction 452 and the page text flow direction 451.

An anchored frame 454 is assumed to have a frame line growth direction 455 in downward direction and a frame text flow direction 456 from right to left, as used in accordance with the Arabic writing style.

The frame growth direction is again defined in a direction away from the anchor point 453, in a downward direction, as indicated by the arrow 457.

In the following a further embodiment of the invention will be described with respect to Fig. 4f.

Fig. 4f shows a page 460 having a page text flow direction 461 oriented in a downward direction, as for example used in accordance with the Chinese and Japanese writing style. A page line growth direction 462 is accordingly oriented towards the left.

An anchor point 463 is defined at an intersection of the page line growth direction 462 and the page text flow direction 461.

An anchored frame 464 associated with the anchor point is assumed to be written in accordance with a writing style as for example used in the German and English language with a frame line growth direction 465 oriented downward in the plane of the figure and a frame text flow direction 466 oriented towards the right.

The frame growth direction of the frame 464 is oriented in a direction away from the anchor point 463, in a downward direction, as indicated by the arrow 467.

As shown in the examples of Figs. 4a - 4f, if possible, the frame growth direction is defined to have the same direction as the frame line growth direction of the anchored frame.

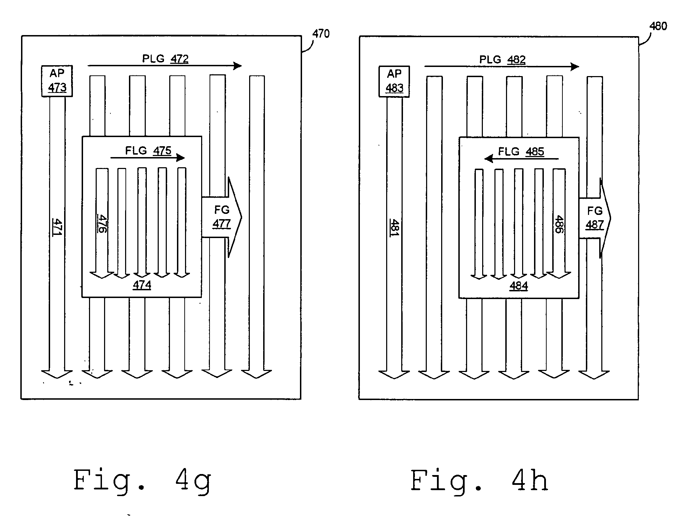

In the following a further example of the invention will be described with respect to Fig. 4g.

Fig. 4g shows an example of a page 470 with a vertical writing style and a page text flow direction 471 in a downward direction. A page line growth direction 472 is assumed to be oriented towards the right, as for example used in accordance with the Mongolian writing style.

An anchor point 473 is located at an intersection of the page line growth direction 472 and the page text flow direction 471, i.e. at the text origin in the present example and denoted 473.

An anchored frame 474 is assumed to have a frame line growth direction 475 towards the right and a frame text flow direction 476 in a downward direction, also as used according the Mongolian writing style.

A frame growth direction is defined in a direction towards the right, in a direction away from the anchor point 473, as indicated by the arrow 477.

A further embodiment of the invention will be described with respect to Fig. 4h. Fig. 4h shows an example of a page 480 with vertical writing style, and a page text flow direction 481 in a downward direction. A page line growth direction is assumed to be oriented towards the right, as indicated by arrow 482, for example as used in accordance with the Mongolian writing style.

An anchor point 483 is again located at an intersection of the page line growth direction 482 and the page text flow direction 481 of the page 480, in the present case assumed to be located at the text origin of the page.

An anchored frame 484 is assumed to have a vertical writing style with a frame text flow direction 486 in a downward direction and is assumed to have a frame line growth direction 485 oriented towards the left, as for example used in accordance with the Chinese and Japanese writing style.

The frame growth direction is oriented away from the anchor point 483, in a direction towards the right, as indicated by the arrow 487.

Even though in the examples of Figs. 4a - 4h an orientation of the frame growth direction away from the anchor point may generally include multiple directions, i.e. vertically oriented or horizontally oriented, it may be preferred that the frame growth direction is oriented to have the same direction as the frame line growth direction of the anchored frame, if possible.

If it is not possible to define the frame growth direction to have the same direction as the frame line growth direction of the anchored frame, i.e. if this direction would be oriented toward the anchor point, the frame growth direction may be oriented to have a direction opposite to the frame line growth direction of the anchored frame.

Alternatively, the frame growth direction may be oriented to have the same direction or a direction opposite to the frame text flow direction of the anchored frame.

Moreover, in an alternative the frame growth direction may be oriented in a direction away from a text origin of the page.

Further, in the examples of Figs. 4a - 4h, in order to correctly define the frame growth direction, it may be determined whether the page text flow direction of the page and the frame text flow direction of the anchored frame are orthogonal to one another, and, in this case, the frame growth direction of the anchored frame may be defined to have the same direction as the page text flow direction of the page.

For performing the sequence of the above operations, means may be provided in association with the data processing unit, such as the data processing unit 200 shown in Fig. 2a, for determining whether the page text flow direction of the page and a frame text flow direction of the anchored frame are orthogonal to one another, and, in this case, defining the frame growth direction of the anchored frame to to have the same direction as page text flow direction of the page.

The embodiments of Figs. 4a - 4h show practical examples for defining a frame growth direction in the presence of different writing styles in a page and/or an anchored frame.

Further, even though the shown cases are illustrated as individual examples, they may be combined with one another, i.e. different page text flow directions and page line growth directions may be combined and associated with various anchored frames.

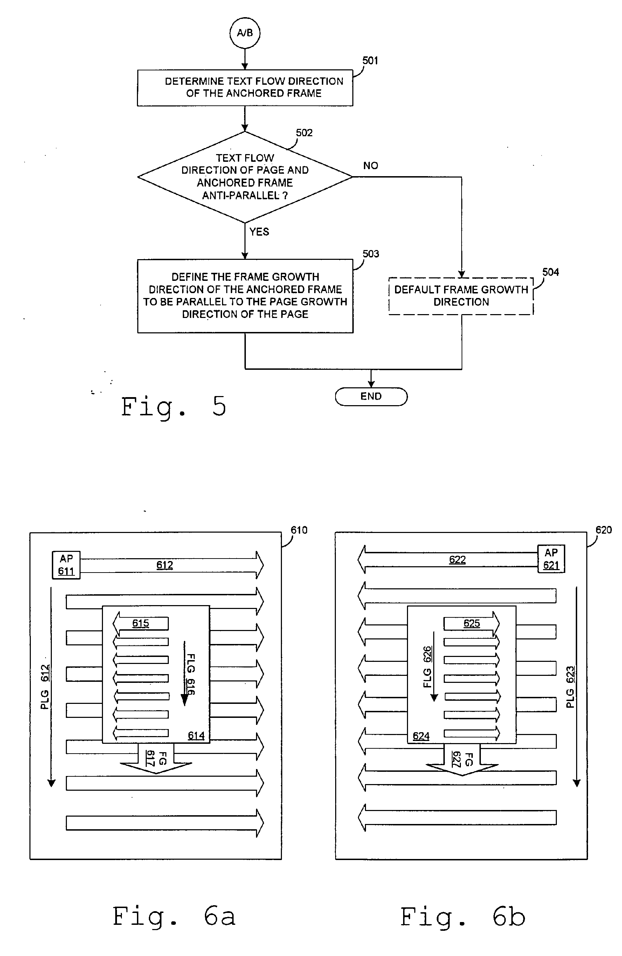

In the following a further embodiment of the invention will be described with respect to Fig. 5.

Fig. 5 shows operations for defining an anchored frame in a page having text information according to another embodiment of the invention, particularly applicable to cases where text flow directions of the page and the frame are opposed to one another.

Operations start at an entry point A, i.e., the operations of Fig. 5 may continue at the exit point A shown in Fig. 1, i.e. after operations 101, 102, 103 and 104.

The operations of Fig. 5 may also be carried out parallel or in a sequence to the operations of Fig. 3 or vice versa, however, Fig. 5 is not limited thereto.

The operations 101 - 104 disclose to determine a page text flow direction of the page, determine a page line growth direction of the page and locating an anchor point of the anchored frame at an intersection of the page text flow direction and the page line growth direction of the page, e.g. at the origin of the page or at any other location in the page, and to define a frame growth direction of the anchored frame to be oriented away from the anchor point.

In an operation 501 of Fig. 5, e.g. following operation 104 of Fig. 1, a text flow direction of an anchored frame in the page is determined. The frame text flow direction, as outlined before, may be determined based on a user input, may be based on a user default setting and/or may be inherited.

Thereafter, in an operation 502 it is determined whether the text flow direction of the page and the anchored frame are have opposing directions. This may, e.g. be the case if an anchored frame with right to left writing, e.g. according to the Arabic writing style, is inserted into a page with left to right writing, as e.g. according to European writing style, or vice versa.

If in operation 502 the decision is "YES", i.e., if the text flow direction of the page and the anchored frame are opposing one another to one another, in an operation 503 the frame growth direction of the anchored frame is defined to have the same direction as the page growth direction of the page. Thus, an interference of a growing anchored frame in the page with a layout of the page can be avoided.

The frame growth direction of the anchored frame may be automatically set, in this case, to have the same direction as the page line growth direction of the page, such that a minimum user interaction is required.

If in operation 502 the decision is "NO", i.e., if the text flow direction of the page and the anchored frame are not opposite to one another, i.e., if the text flow of the page and the anchored frame do not have opposite directions, in an operation 504 a default frame growth direction can be selected. The default frame growth direction may be a growth direction determined based on a user setting or a user might be prompted to define a frame growth direction.

Alternatively, if in operation 502 the decision is "NO", the sequence of operations of embodiment shown in Fig. 3 may be carried out, i.e., it may be determined whether the text flow direction of the page and the anchored frame are orthogonal to one another, and, if this is the case, the frame growth direction of the anchored frame may be defined to have the same direction as the page text flow direction of the page. And, if the text flow direction of the page and the anchored frame are not orthogonal to one another, in this case, the default frame growth direction may be used.

The operations shown in Fig. 5 may be carried out using a data processing device such as the data processing unit 200 illustrated with respect to Fig. 2a. For example, the data processing unit 200 may include means for determining whether the page text flow direction of the page and the frame text flow direction of the anchored frame are opposite to one another, and, to define, in this case, the frame growth direction of the anchored frame to have the same direction as the page line growth direction of the page. Said means for determining may be constituted by a sequence of coded instructions for execution on a central processing unit of the data processing unit 200 and/or may at least partially be realized as hardware components.

In the following further embodiments of the invention will be described with respect to Figs. 6a and 6b.

Figs. 6a and 6b graphically illustrate defining an anchored frame in a page in the case of Fig. 5, i.e., if the text flow direction of the page and the anchored frame are opposite to one another.

The arrangements shown in Figs. 6a and 6b may be controlled using a data processing unit such as the data processing unit 200 shown in Fig. 2a, suitably modified to determine whether a text flow direction of the page and the anchored frame are opposite to one another, and, in this case, to define the frame growth direction of the anchored frame to have the same direction as the page line growth direction of the page.

Fig. 6a shows a page 610 including a horizontal page text flow direction 612 from left to right, i.e. as used according to the European writing style. Further, the page 610 has a page line growth direction 613 in downward direction, e.g. as commonly used according to the European writing style. That is, characters are arranged from an upper left corner of the page towards the right side in lines and consecutive lines are arranged below one another in downward direction.

Further, in Fig. 6a an anchored frame 611 is located at the text origin of the page, i.e. at an upper left corner of the page 610. According to an alternate embodiment, the anchor point may always be defined to coincide with the text origin of the page, i.e., the anchor point may always be located at the text origin of a page associated with the anchored frame.

Further, Fig. 6a shows an anchored frame 614 having horizontal lines with a frame text flow direction 615 from right to left and a frame line growth direction 616 in downward direction, e.g. as used in accordance with the Arabic writing. Accordingly, the anchored frame may constitute a text or information insert including text or information according to the Arabic writing style, in a page according to the European writing style.

As in this case the text flow direction of the page and the anchored frame are opposite to one another, a frame growth direction 617 of the anchored frame is defined to have the same direction as the page line growth direction of the page, i.e. in downward direction. Thus, the frame growth direction 617 of the anchored frame fulfils the requirements outlined with respect to Fig. 2a and Fig. 2b and Figs. 4a - 4h, i.e., that the frame growth direction of the anchored frame is oriented away from the anchor point/origin of the page.

A further example of opposing text flow direction of a page and anchored frame is shown in Fig. 6b, illustrating a page 620 having horizontal page text flow direction 622 from right to left, e.g. as used in accordance with the Arabic writing style and a page line growth direction 623 in downward direction. An anchor point 621 is located at the text origin of the page 620, i.e. at the position of a first character placed on the page that is the upper right corner of the page.

Fig. 6b illustrates an anchored frame 624 having a horizontal frame text flow direction 625 from left to right and a downward oriented frame line growth direction 626, e.g. as used in accordance with the European writing style. Again, the frame growth direction 627 of the anchored frame 624 is oriented away from the anchor point 621 and, as the text flow direction of the page and the anchored frame are opposite to one another, the frame growth direction of the anchored frame is defined to have the same direction as the page line growth direction of the page.

Figs. 6a and 6b illustrate further examples for defining a frame growth direction in a page, in order to reduce an interference with an existing lay out.

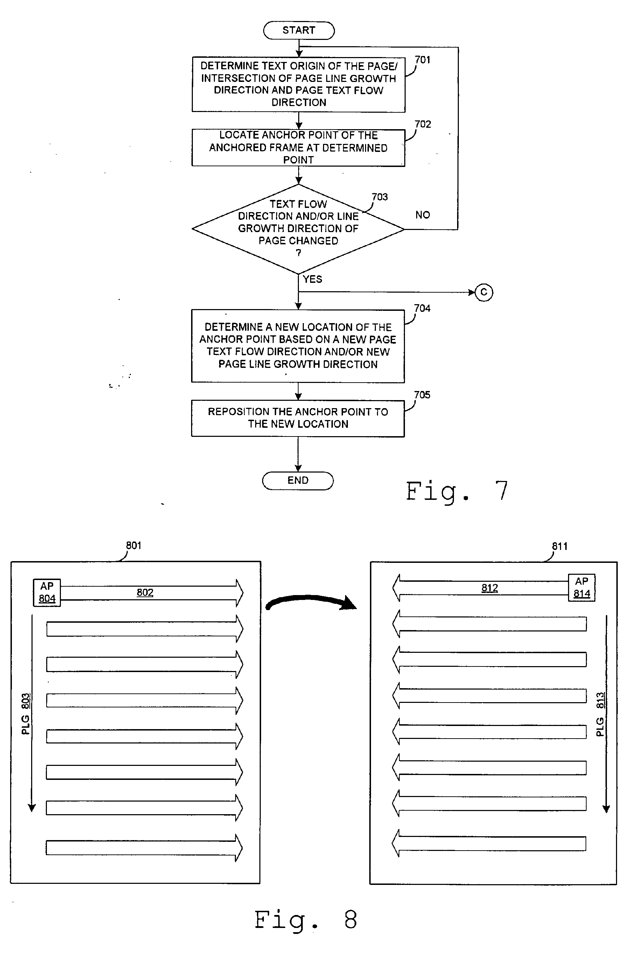

In the following a further embodiment of the invention will be described with respect to Fig. 7.

Fig. 7 shows operations for defining an anchored frame in a page according to another embodiment of the invention. Fig. 7 particularly illustrates a definition of an anchored frame upon changes to the writing style of the page associated with the anchored frame.

In the embodiment of Fig. 7 it is assumed that an anchored frame is already present in a page and that a text flow direction and/or line growth direction of the page is changed, e.g. in accordance with a user command.

In a first operation 701 a text origin of the page or a location for an anchor point at an intersection of a page line growth direction and a page text flow direction of the page is determined, e.g. as outlined with respect to previous embodiments. This may involve a user interaction or predefined rules or settings.

In an operation 702 the anchor point of the anchored frame is located at the determined point, i.e. at the intersection of the page line growth direction and page text flow direction, which may be the text origin of the page or another location.

In an operation 703 it is then determined whether the text flow direction and/or line growth direction of the page has changed. Changes may occur based on a user command, e.g., if a user changes the layout of the page. For example, a user controlling a text processing application may rearrange portions of a text document and change certain page parameters in order to adapt the layout of a page of the text document. If in operation 703 the decision is "YES", i.e. if the text flow direction and/or line growth direction of the page has changed, in an operation 704 a new location of the anchor point is determined based on the new page text flow direction and/or new page line growth direction. Thus, if one or both of the text flow direction and line growth direction of the page were changed, a new text origin or intersection of page line growth direction and page text flow direction is determined.

Thereafter, in operation 705 the anchor point is repositioned to the determined new location, i.e. the new text origin or determined new intersection of the page line growth direction and page text flow direction.

For example, if a writing style before a change was left to right as according to the European writing style, the text origin was located at the upper left corner of the page. Further, if after the changes to the page the writing style is right to left, e.g. as according to the Arabic writing style, the text origin will now be located in the upper right corner of the page, and, the anchor point will be relocated in accordance therewith.

And, in further operations, the frame growth direction of an anchored frame can now also be redefined based on the new location of the text origin/anchor point, i.e., the frame growth direction can be determined to be oriented away from the new text origin/anchor point.

A data processing device such as the data processing unit 200 shown in Fig. 2a may execute the operations shown in Fig. 7. The data processing unit 200 may include means for locating the anchor point at the text origin of the page linked with the anchored frame and means for determining a new location of the anchor point based on a new page text flow direction and a new page line growth direction of the page, if at least one of the page text flow direction and age line growth direction of the page were changed. Further, the data processing unit 200 may include means for repositioning the anchor point to the determined new location. Thus, the parameters of an anchored frame, specifically the frame growth direction, will now be determined based on the new anchor point/text origin, i.e. to avoid interference with a layout of the page.

Said means for locating the anchor point at the text origin of the page linked with the anchored frame and/or said means for determining a new location of the anchor point and/or said means for repositioning the anchor point to the determined new location may be constituted by a sequence of coded instructions for execution on a central processing unit of the data processing unit 200 and/or may at least partially be realized as hardware components.

In the following a further embodiment of the invention will be described with respect to Fig. 8.

Fig. 8 graphically illustrates relocating an anchor point based on a change of the writing style of a page.

On the left side of Fig. 8 a page 801 is illustrated with a horizontal writing style with a text flow direction 802 from left to right and a page line growth direction 803 downward oriented, as used according to the European writing style. An anchor point/text origin 804 is accordingly located at the upper left corner of the page, i.e. at a location for a first character on the page.

Further, it is assumed that a writing style of the page 801 is subsequently changed, as shown on the right side of Fig. 8. After the changes to the writing style, the page 801 is assumed to have a new writing style from right to left with a text flow direction 812 from right left, e.g. as according to the Arabic writing style. Further, a page line growth direction 813 is assumed to be in downward direction.

In accordance with the changes to the page text flow direction from left to right to right to left, the anchor/text origin 814 is relocated to the upper right corner of the page, i.e. to the location of the first character in the page after the changes.

Relocating the anchor point as described with respect to Figs. 7 and 8 allows to minimize a user interaction upon changing parameters of the page, if the anchor point is automatically relocated to a suitable position.

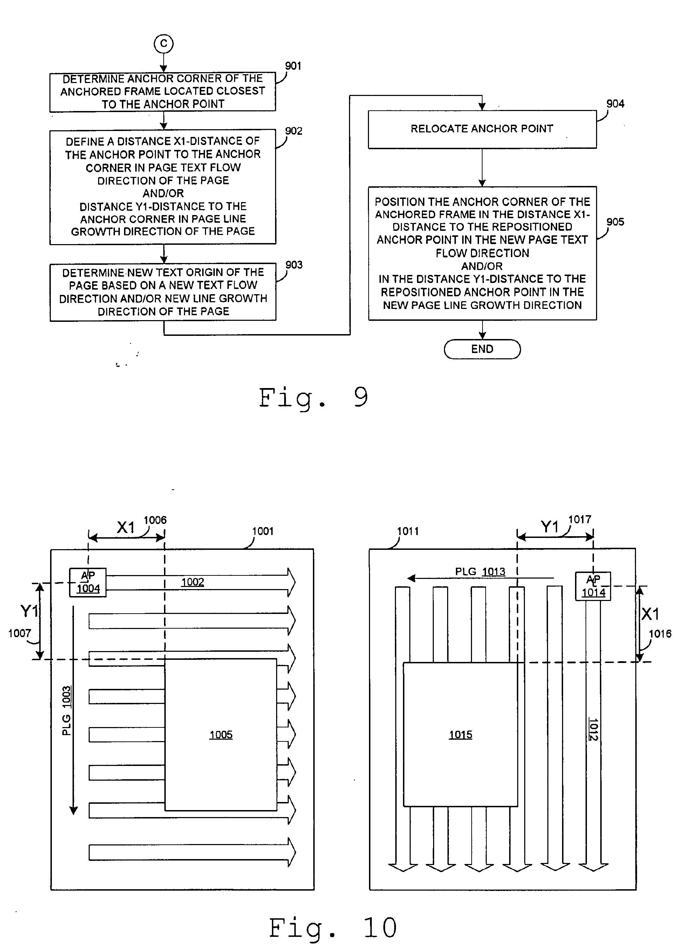

In the following a further embodiment of the invention will be described with respect to Fig. 9.

Fig. 9 shows operations for defining an anchor frame in a page according to another embodiment of the invention.

Fig. 9 particularly outlines operations to relocate an anchored frame if parameters of a page associated with the anchored frame are changed, e.g. based on user interaction. The operations of Fig. 9 may be carried out following the operations outlined with regard to Fig. 7, or at any other point in time.

Operations may start at an entry point C corresponding to an exit point C of Fig. 7. Thus, operations in Fig. 9 may be considered to start after determining that a text flow direction and/line growth direction of the page associated with the anchor frame were changed, e.g. after introducing and arranging the anchored frame.

In an operation 901 an anchor corner of the anchored frame located closest to the anchor point is determined. Usually, an anchored frame is rectangular and thus has four corners, one of which being located closest to an anchor point associated with the anchored frame. For example, if the anchor point is located at the text origin, in a page with European writing style, the anchor point will be located on the upper left corner of the page. Further, it is assumed that the anchored frame is located somewhere in the page, the upper left corner of the anchored frame wall be the anchor corner of the anchored frame located closest to the anchor point. However, shapes of anchored frames other than rectangular may be considered.

An operation 902 defines a distance X1-distance from the anchor point to the anchor corner in page text flow direction of the page and/or a distance Y1-distanc from the anchor point to the anchor corner in page line growth direction of the page. In order to achieve scalability, the distances X1 and/or Y1 may be determined in dependence on an actual size of the page, e.g. as actually shown on a print out of the page and frame. Thus, both distances X1 and Y1 are determined based on the anchor point.

Alternatively, in operation 902 only one of the X1-distance and Y1-distance may be determined, if only this particular one of the distances is to be maintained in relation to the anchor point. For example, one of the distances could be defined via other criteria. A horizontal or vertical position of the anchored frame could be centred, left justified, right justified, tied to the upper or lower boundary of the page, etc. Thus, the anchor frame may need to be maintained in the determined distance to the anchor point in one direction, e.g. horizontal or vertical, whereas the other parameter defining the position of the anchor frame, e.g. the other one of the horizontal and vertical direction, may be determined based on the above other criteria.

Thereafter, in an operation 903 a new text origin of the page is determined based on a new page text flow direction and/or new page line growth direction of the page, e.g. as specified by a user.

And, in operation 904 the anchor point is relocated, e.g. as outlined with regard to Figs. 7 and 8.

Then, in an operation 905 the anchor corner of the anchored frame is repositioned in the distance X1-distance to the repositions anchor point in the new page text flow direction and/or in the distance Y1-distance to the reposition anchor point in the new page line growth direction of the page.

Accordingly, the user does not have to deal with repositioning the anchored frame upon changing a writing style of the underlying page, the anchored frame is automatically repositioned in accordance with the introduced changes to the page, in order to minimize an interference with an existing layout.

The operations illustrated with respect to Fig. 9 may be carried out using a data processing device, e.g. the data processing unit 200 outlined with respect to Fig. 2c. Thus, the data processing unit 200 may include means for determining an anchor corner of the anchored frame located closest to the anchor point, and may include means for defining a distance X1-distance of the anchor point to the anchor corner in page text flow direction of the page. Still further, the data processing unit 200 may include means for positioning the anchor of the anchored frame in the distance X1-distance to a reposition anchor point in a new page text flow direction of the page, after the page associated with the anchored frame has been modified, e.g. in accordance with a new writing style.

The above further means of the data processing unit 200 may be constituted by a sequence of coded instructions for execution on a central processing unit of the data processing unit 200 and/or may at least partially be realized as hardware components.

Further, the data processing unit 200 may include means for defining a distance Y1-distance of the anchored frame to the anchor corner in page line growth direction of the page and, if the parameters of the page associated with the anchored frame are changed, means for repositioning the anchor corner of the anchored frame in the distance Y1-distance to the repositioned anchor point in the new page line growth direction of the page after the changes.

Advantageously, as outlined above, only one of the X1- and Y1-distances may be determined, whereas another parameter defining the position of the anchored frame may be a fixed position determined based on one of the page text flow directions and the page line growth direction of the page. For example, as mentioned above, the anchored frame may be located at a vertical or horizontal centre line of the page, and the fixed position may be redefined based on the new page text flow direction and the new page line growth direction of the page. For example, if an anchored frame was located in a page in relation to a vertical centre line of the page, and if a text flow direction of the page was rotated by 90°, the anchored frame will now be located in relation to a horizontal centre line of the page after the changes.

Still further, if at least one of the page text flow direction and page line growth direction of the page is changed, a height dimension and/or a width dimension and/or a frame growth direction of the anchored frame may be maintained unchanged, in order to minimally infer with a page layout of the page. For example, the orientation, e.g. an upright rectangle, of the anchored frame, i.e., a height dimension and width dimension, may be maintained despite changes to the writing style of the page. Still further, a frame growth direction of the anchored frame may be maintained unchanged, however, preferably only if the frame growth direction fulfils the criterion to be oriented away from the anchor point/text origin of the page after the changes.

In the following a further embodiment of the invention will be described with respect to Fig. 10.

Fig. 10 graphically illustrates relocating an anchor point and repositioning an anchored frame in accordance with changes to a writing style of a page associated with the anchored frame, according to another embodiment of the invention.

Fig. 10 shows on the left hand side of the Fig. a page 1001 with a horizontal writing style with a page text flow direction 1002 from left to right and a page line growth direction 1002 in downward direction, e.g. as used in accordance with European writing style. Further, the page 1001 includes an anchor point 1004 at the text origin of the page, i.e. the upper left, of the page, the position of the first character within the page. Still further, an anchored frame 1005 is shown, located in a distance X1-distance 1006 from the anchor point 1004 in page text flow direction 1002.

The anchor corner, e.g. as determined in accordance with operation 901 of Fig. 9, of the anchored frame is located in a distance Y1-distance 1007 from the anchor point in page line growth direction 1003 of the page. As noted before, the anchor corner is the corner of the anchored frame located closest to the anchor point.

The page 1001 shown in Fig. 10 is considered to constitute a page before changes to the writing style of the page are effected.

Further, the right hand side of Fig. 10 is considered to show the page, now denoted 1011, after changes to the writing style of the page were effected. The page 1011 is assumed to direction and a page line growth direction 1013 towards the left, e.g. as used in accordance with Chinese or Japanese writing style.

The page 1011 further shows a repositioned anchor point 1014, e.g. repositioned in accordance with operations outlined with respect to previous embodiments.

In order to maintain an appropriate layout of the page despite the changes to the writing style as far as possible, the anchored frame is repositioned in accordance with the new page text flow direction and page line growth direction of the page 1011. Thus, according to the present embodiment, the anchor corner of the anchored frame is located in a distance X1-distance 1016 in the new page text flow direction 1012 of the page and a distance Y1-distance 1017 in page line growth direction 1013 of the page 1011 after the changes were effected.

Accordingly, a layout of the page including the anchored frame is minimally affected, despite the changes to the writing style of the page.

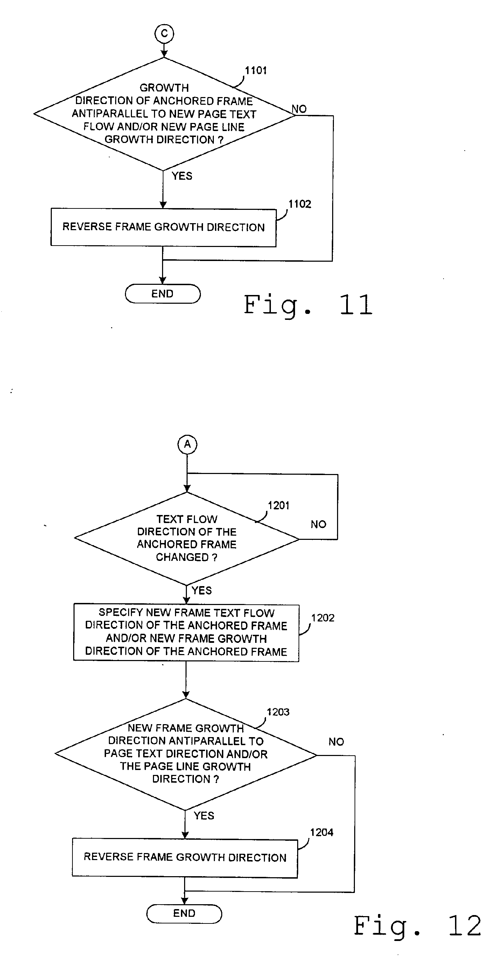

In the following, a further embodiment of the invention will be described with respect to Fig. 11.

Fig. 11 outlines further operations for defining an anchored frame in a page according to another embodiment of the invention, particularly illustrating operations to handle a frame growth direction of the anchored frame in view of changes to the writing style of a page associated with the anchored frame.

Operations may start at an entry point C corresponding to an exit point C of Fig. 7, i.e., operations may start after an operation 703 illustrated with respect to Fig. 7.

In operation 1101 it is determined whether a growth direction of the anchored frame is opposite to the new page text and/or new page line growth direction of the page.

If the decision in operation 1101 is "YES", i.e., if the growth direction of the anchored frame is indeed opposite to the new page text and/or new page line growth direction, the frame growth direction of the anchored frame is reversed in an operation 1102. Thus, by reversing the frame growth direction in this case, the frame growth direction is again in a direction oriented away from the text origin/anchor point of the page, as outlined with regard to previous embodiments.

The operations of Fig. 11 may be carried out using a data processing device such as the data processing unit 200 shown in Fig. 2a. For example, the data processing unit 200 may include means for determining whether the frame growth direction of the anchored frame is opposite to at least one of the new page text direction of the page and the new page line growth direction of the page after changes were carried out to the writing style of the page, and, the data processing unit 200 may include means for reversing the frame growth direction in this case.

The above further means of the data processing unit 200 may be constituted by a sequence of coded instructions for execution on a central processing unit of the data processing unit 200 and/or may at least partially be realized as hardware components.

In the following a further embodiment of the invention will be described with respect to Fig. 12.

Fig. 12 shows operations for defining an anchored frame in a page according to another embodiment of the invention.

Operations of Fig. 12 may start at an entry point A corresponding to an exit point A in Fig. 1, i.e., operations of Fig. 12 may be carried out after operation 104 of Fig. 1, however, Fig. 12 is not limited thereto. The operations of Fig. 12 particularly illustrate a case where a writing style of the anchored frame is changed, while the writing style of the page is maintained unchanged.

In a first operation 1201 it is determined whether a text flow direction of the anchored frame was changed, e. g. based on a user interaction.

If in operation 1201 the decision is "YES", i.e., if the text flow direction of the anchored frame was changed, in an operation 1202 a new frame text flow direction of the anchored frame and/or a new frame growth direction of the anchored frame is determined, e.g. as outlined with respect to previous embodiments.

In order to avoid interference with an existing layout of the page, in an operation 1203 it is determined whether the new frame growth direction is opposite to the page text direction and/or the page line growth direction of the page.

If in operation 1203 the decision is "YES", indicating that the new frame growth direction is opposite to the page text direction and/or page line growth direction, in an operation 1204 the frame growth direction is reversed. By reversing the frame growth direction of the anchored frame it can be assured that the frame growth direction is in a direction oriented away from the anchor point/text origin of the page, to minimally interfere with a layout of the page.

The operations of Fig. 12 may be carried out using a data processing device, such as the data processing unit 200 of Fig. 2a. The data processing unit 200 may thus include means frame was changed, means for specifying a new frame text flow direction of the anchored frame and a new frame growth direction of the anchored frame. Further, the data processing unit 200 may include means for determining whether the new frame growth direction of the anchored frame is opposite to at least one of the page text flow direction and the page line growth direction of the page, and in this case, to reverse the frame growth direction of the anchored frame.

The above further means of the data processing unit 200 may be constituted by a sequence of coded instructions for execution on a central processing unit of the data processing unit 200 and/or may at least partially be realized as hardware components.

As outlined before with respect to Fig. 11, if the text flow direction of the anchored frame is changed, at least one of a height dimension, a width dimension and frame growth direction of the anchored frame may be maintained unchanged, e.g. based on user preference, for example, an upright rectangular anchored frame and/or a frame growth direction in downward direction of the anchored frame may be maintained despite changing a writing style of the anchored frame, in order to avoid interference with an existing layout of the page.

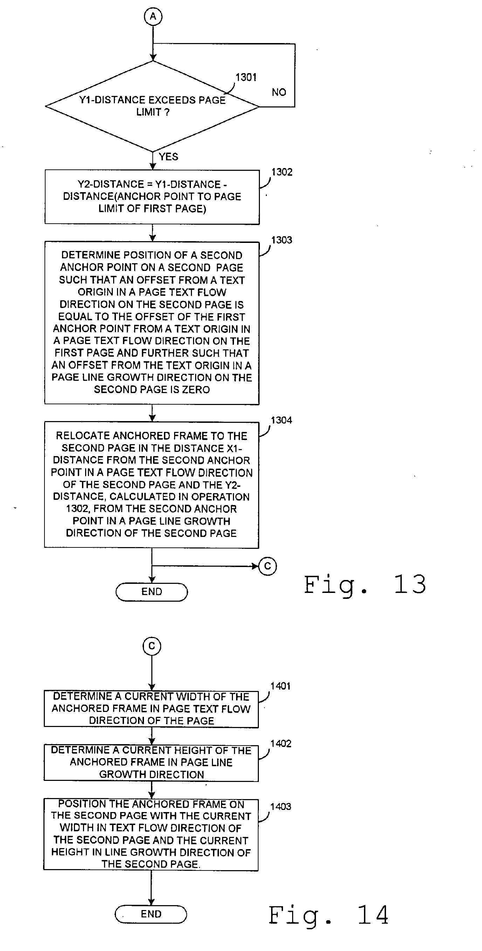

In the following, a further embodiment of the invention will be described with respect to Fig. 13.

Fig. 13 shows operations for defining an anchored frame in a page according to another embodiment of the invention, particularly focussing on relocating an anchored frame, if an anchor corner of a frame lies outside a page limit of a page. In this case it is understood that the frame should be appropriately relocated, as for example a printout with a frame exceeding a page limit may not be possible.

For example, if a distance Y1-distance of an anchored frame from the anchor point is defined such that the anchor corner of the frame and thus the anchored frame lies outside the page, i.e. exceeds a page limit, the anchored frame must be relocated to another page. Here, a page limit may be the actual border of a page, corresponding to a paper size, or the page limit may be freely defined as the limit of a region constituting a page, e.g. a region somewhat smaller than the actual paper size defining a printable region.

Operations of the embodiment of Fig. 13 may start at an entry point A corresponding to an exit point A of Fig. 1, i.e., operations of Fig. 13 may follow operations 101 - 104 of Fig. 1, however, Fig. 13 is not limited thereto.

In the present example it is assumed that an anchored frame is located relative to an anchor point on a page by a user or by a program with a distance Y1-distance in page line growth direction exceeding the page limit of the page.

Thus, according to the present embodiment, in an operation 1301 is first determined whether the distance Y1-distance exceeds the page limit of a first page, i.e. whether the anchor corner of an anchored frame is outside the page limits.

If in operation 1301 the decision is "YES", i.e. if it is determined that the distance Y1-distance exceeds the page limit of a first page, in an operation 1302 a distance Y2-distance is calculated by subtracting from the distance Y1-distance the distance from the anchor point on the first page to the page limit of the first page. That is,

Y2-distance = Y1-distance - distance(anchor point to page

limit of first page)

Then, in an operation 1303 a position of a second anchor point on a second page is determined. The second page may be for example a page following in a sequential order the first page. In operation 1303 the position of the second anchor point is determined such that an offset from a text origin in a page text flow direction on the second page is equal to the offset of the first anchor point from a text origin in a page text flow direction on the first page and further such that an offset from the text origin in a page line growth direction on the second page is zero. The text origin of the second page may be determined based on the text flow direction of the second page and the page line growth direction of the second page, as outlined above.

Thereafter, in an operation 1304 the anchored frame is relocated to the second page in the distance X1-distance from the second anchor point in a page text flow direction of the second page and the Y2-distance, calculated in operation 1302, from the second anchor point in a page line growth direction of the second page.

For example, in a page with horizontal writing and a frame growth direction in a downward direction, the distance Y1-distance may exceed the lower edge of the page, and thus, the distance Y2-distance would, in this case, be the distance Y1-distance minus the distance from the anchor point to the lower edge of the page.

According to an advantageous embodiment it is checked continuously or in intervals whether the anchored frame is located beyond a page limit such that the anchored frame may be dynamically arranged on the pages.

Relocating the anchored frame as outlined above allows minimal interference with an existing layout of the page, if a frame lies outside a page limit.

The operations of Fig. 13 may be carried out using a data processing device such as the data processing unit 200 outlined with respect to Fig. 2a. Thus, the processing unit 200 may include means for determining if the distance Y1-distance exceeds a page limit of a first page, the first and second page being, for example, consecutive pages of a text document. Further, the data processing unit 200 may include means for calculating a distance Y2-distance by subtracting from the distance Y1-distance the distance from the anchor point on the first page to the page limit of the first page, and means for positioning a second anchor point on a second page such that an offset from a text origin in a page text flow direction on the second page corresponds to the offset of the first anchor point from a text origin in a page text flow direction on the first page and such that there is substantially no offset from the text origin in a page line growth direction on the second page.

For example, the means for positioning the second anchor may arrange the second anchor point on the second page such that an offset from a text origin in a page text flow direction on the second page is equal or at least similar to the offset of the first anchor point from a text origin in a page text flow direction on the first page and such that an offset from the text origin in a page line growth direction on the second page is zero or at least close to zero.

Further, the data processing unit may include means for locating the anchored frame in the distance X1-distance from the second anchor point in a page text flow direction of the second page and the Y2-distance from the second anchor point in a page line growth direction of the second page.

The above further components of the data processing unit 200 may be constituted by a sequence of coded instructions for execution on a central processing unit of the data processing unit 200 and/or may at least partially be realized as hardware components.

In the following a further embodiments of the invention will be described with respect to Fig. 14.

Fig. 14 shows operations for defining an anchored frame in a page according to another embodiment of the invention, particularly outlining operations for resizing an anchored frame, if the anchored frame is moved to a second page.

Operations of the embodiment of Fig. 14 may start at an entry point C corresponding to an exit point C of Fig. 13, i.e. operations of Fig. 14 may be carried subsequently to the operations of Fig. 13, however, Fig. 14 is not limited thereto.

In an operation 1401 a current width of the anchored frame in page text flow direction of the page is determined, and in an operation 1402 a current height of the anchored frame in page line growth direction of the page is determined. The current width and current height define the size of the anchored frame on the page, e.g. upon the instance, where the anchored frame exceeds a page limit.

In an operation 1403 the anchored frame is then positioned on the second page with the current width of the frame in text flow direction of the second page and the current height in line growth direction of the second page. Accordingly, an orientation of the anchored frame moved from the first page to the second page is rearranged in accordance with the writing style of the second page.

Means may be provided, e.g. in association with the data processing unit 200 outlined with respect to Fig. 2a, for determining a current width and a current height of the anchored frame in page text flow direction and page line growth direction of the page, respectively. Further, means may be provided for positioning the anchored frame on the second page with a current width in text flow direction of the second page and the current height in the line growth direction of the second page. The above further means of the data processing unit 200 may be constituted by a sequence of coded instructions for execution on a central processing unit of the data processing unit 200 and/or may at least partially be realized as hardware components.

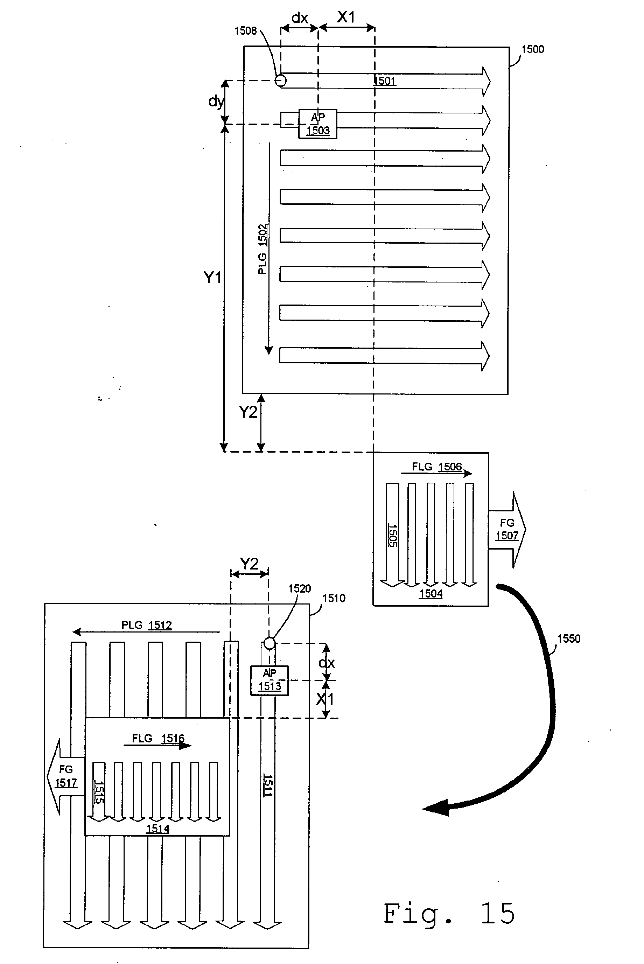

In the following, a further embodiment of the invention will be outlined with respect to Fig. 15.

Fig. 15 illustrates a page 1500 with a horizontal text flow direction 1501 from left to right and a page line growth direction 1502 in a downward orientation, e.g. as used according to the European writing style.

The page 1500 further includes an anchor point 1503 and an anchored frame 1504 in a distance X1-distance in page text flow direction of the page and a distance Y1-distance in page line growth direction of the page with regard to the anchor point. The anchored point is assumed to be displaced from a text origin 1508 of the page 1500 by a distance dx in the page text flow direction and by a distance dy in the page line growth direction of the page 1501, e. g. as located by a user. Of course, the anchor point could also be located directly at the text origin of the page.

The anchored frame 1504 has a text flow direction 1515 in a vertical downward direction and a frame line growth direction 1506 oriented toward the right, e.g. as used according to the Mongolian writing style. In accordance with the embodiments outlined before, a frame growth direction 1507 is determined, in a direction oriented away from the text origin/anchor point. Further, it is assumed that the anchored frame lies outside the page limits of the page, i. e., in the present case it is assumed that the distance Y1-distance exceeds a lower edge of the page 1500. In the present embodiment the page limit is considered to be the actual border of a page, corresponding to a paper size. However, alternatively, the page limit may be freely defined as the limit of a region constituting a page, e.g. a region somewhat smaller than the actual paper size defining a printable region.

In accordance with the position of the anchored frame it is determined that the frame must be relocated and, as illustrated by the arrow 1550, the anchored frame is relocated on a second page 1510, as outlined below.

The second page 1510 shown in Fig. 15 is assumed to have a page text flow direction 1511 in a downward direction and a page line growth direction 1512 oriented towards the left, e.g. as according to the Chinese and Japanese style.

In accordance with the embodiments of Fig. 13, for relocating the anchored frame to the second page 1510, a text origin 1520 of the second page is determined and a second anchor point 1513 is positioned on the second page such that an offset dx from the text origin 1520 in a page text flow direction 1511 on the second page 1510 corresponds to the offset dx of the first anchor point 1503 from the text origin 1508 in the page text flow direction 1501 on the first page 1500 and such that the second anchor point exhibits substantially no offset from the text origin 1520 in a page line growth direction 1512 on the second page 1510.

For example, a text origin 1520 of the second page is determined and a second anchor point 1513 is positioned on the second page such that an offset dx from the text origin 1520 in a page text flow direction 1511 on the second page 1510 is equal or at least similar to the offset dx of the first anchor point 1503 from the text origin 1508 in the page text flow direction 1501 on the first page 1500 and such that an offset from the text origin 1520 in a page line growth direction 1512 on the second page 1510 is zero or at least close to zero.

Further, in accordance with the embodiments of Fig. 13, for relocating the anchored frame to the second page, a distance Y2-distance is calculated as outlined above, and the anchored frame is relocated to the second page 1510 in a distance X1-distance in page text flow direction 1511 of the second page and the distance Y2-distance in page line growth direction 1512 of the second page 1510.

As an alternative to locating a second anchor point on the second page, alternate schemes to relocate the frame to the above defined position on the second page may be used. For example, correspondingly adjusted distances could be determined from the text origin on the second page or any other location on the second page.

Further, in the present embodiment, the anchored frame on the second page, denoted 1516, is considered to maintain its frame text flow direction 1515 in a downward orientation and frame line growth direction 1516 oriented towards the right. However, alternative embodiments are possible, where the frame text flow direction of the anchored frame on the second page 1510 is changed.

A frame growth direction 1517 of the relocated anchored frame can now be defined, as outlined with respect to previous embodiments, i.e. in a direction oriented away from the text origin/anchor point of the second page.

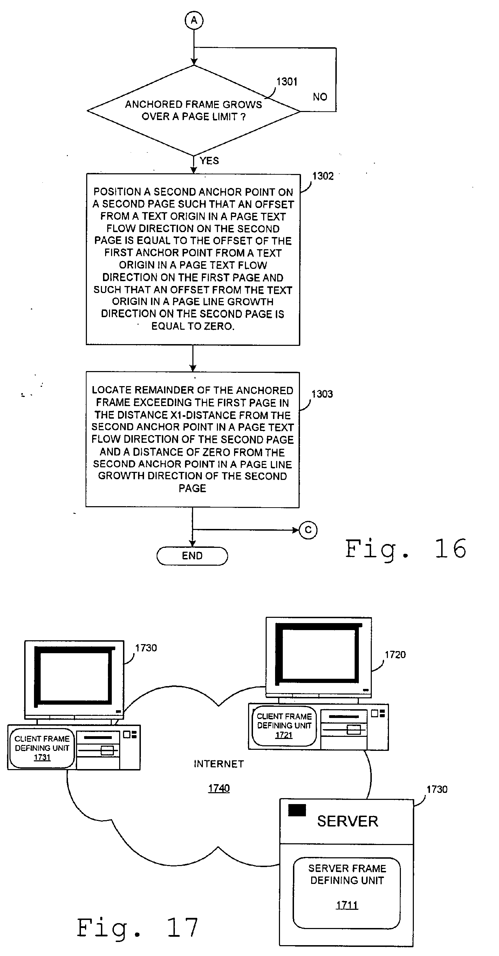

In the following a further embodiment of the invention will be described with respect to Fig. 16.

Fig. 16 illustrates operations to relocate a part of an anchored frame, if the anchored frame grows beyond a page limit of a page. Again, the page limit may be the actual border of a page, corresponding to a paper size, or the page limit may be freely defined as the limit of a region constituting a page, e.g. a region somewhat smaller than the actual paper size defining a printable region.

If the frame grows over a page limit, according to the present embodiment, the part of the anchored frame exceeding the page limit should be appropriately relocated, as for example a printout with a frame exceeding a page limit may not be possible.

Operations of the embodiment of Fig. 16 may start at an entry point A corresponding to an exit point A of Fig. 1, i.e., operations of Fig. 13 may follow operations 101 - 104 of Fig. 1, however, Fig. 13 is not limited thereto.

In the present example it is assumed that an anchored frame is located on a page by a user or program and, it is assumed that the frame grows, e.g. based on text inputted into the frame.

Accordingly, the frame may grow with the additional text being input, and, the frame at one point in time may grow to exceed a page limit of the page. In the present case it is assumed that the anchored frame grows beyond a page limit in page line growth direction. However, in alternate embodiments the anchored frame growing to exceed the page limits in page text flow direction may be handled analogously.

In a first operation 1601 it is thus determined whether the anchored frame grows over a page limit of a first page in page line growth direction into a second page.

If in operation 1601 the decision is "YES", i.e. if it is determined that, for example based on inputted text into the frame, the anchored frame grows over a page limit into a second page, in an operation 1602 a second anchor point is positioned on a second page such that an offset from a text origin in a page text flow direction on the second page corresponds to, e.g. is equal or similar to, the offset of the first anchor point from a text origin in a page text flow direction on the first page and such that an offset from the text origin in a page line growth direction on the second page is equal to zero or at least small or close to zero. Accordingly, the second anchor point maintains its relative position in page text flow direction, but is moved to the level of the text origin of the second page in page line growth direction of the second page, e.g. the "upper" page limit.

The second page may be a second page of the text document following the first page, as outlined above. For example, a text document may be constituted by a plurality of pages, with the second page subsequent to a page including the anchored frame growing to exceed the page limit. Further, the text origin of the second page may be determined based on the text flow direction of the second page and the page line growth direction of the second page, as outlined above.

In operation 1603 then a remainder of the anchored frame exceeding the first page is located in the distance X1-distance from the second anchor point in a page text flow direction of the second page and a distance close to zero or zero from the second anchor point in a page line growth direction of the second page. The remainder is the part of the anchored frame which exceeds the page limit of the first page. Thus, the remainder of the anchored frame "sticks" to the level of the text origin in page line growth direction, but maintains the position in page line growth direction as on the first page, i.e. the page with the first part of the anchored frame.

According to an advantageous embodiment it is checked continuously or in intervals whether the anchored frame exceeds a page limit such that the anchored frame may be dynamically arranged on the pages.

Relocating the anchored frame as outlined above allows minimal interference with an existing layout of the page, if a frame grows over a page limit.

The operations of Fig. 16 may be carried out using a data processing device such as the data processing unit 200 outlined with respect to Fig. 2a. Thus, the processing unit 200 may include means for determining if the anchored frame grows over a page limit of a first page in page line growth direction, means for positioning a second anchor point on a second page such that an offset from a text origin in a page text flow direction on the second page corresponds to, or is equal or similar to the offset of the first anchor point from a text origin in a page text flow direction on the first page and such that an offset from the text origin in a page line growth direction on the second page is zero, or at least small or close to zero; and means for locating a remainder of the anchored frame exceeding the first page in the distance X1-distance from the second anchor point in a page text flow direction of the second page and a distance of substantially zero from the second anchor point in a page line growth direction of the second page.

The above further elements of the data processing unit 200 may be constituted by a sequence of coded instructions for execution on a central processing unit of the data processing unit 200 and/or may at least partially be realized as hardware components.

In the following, a further embodiment of the invention will be outlined with respect to Fig. 17.

Fig. 17 shows elements of a system for defining an anchored frame in a page, particularly showing a network environment including clients and server.

Fig. 17 illustrates a server unit 1710 and two exemplary client units 1720 and 1730 communicating with the server unit via a network 1740 such as the Internet.

The client units 1720 and 1730 may be arranged to control an execution of a text processing application at the server unit 1710, e.g. through user commands and through a keyboard or a mouse and pointing device.

The client units may be constituted by general purpose data processing devices, such as a desktop computer, a laptop computer, a palmtop computer, a personal digital assistant (PDA) and /or a communication device including mobile phones. The client units preferably are equipped with the appropriate means to establish a connection to the server unit, e.g. through the Internet or using any other type of connection.

The server unit 1710 may be arranged to execute the text processing application in accordance with commands received from the client units. Thus, the server unit may be a data processing device with large capacity, to serve a large number of users concurrently.

For example, the client unit 1720 may launch a first instance of the text processing application at the server unit 1710, and the second client unit 1730 may launch a second instance of the text processing application at the server unit 1710.

Further, the server unit 1710 may include a server frame defining unit 1711 for defining an anchored frame in a page, e.g. as generated by the text processing application. Said server frame defining unit may realize at least part of the functionality for defining an anchored frame as outlined in accordance with the previous embodiments. Said means for defining the anchored frame may be realized as an integral part of the text processing application, or may be arranged in a separate application assisting the text processing application.

Moreover, the client units 1720 and 1730 include client frame defining units 1721 and 1731, respectively. The client frame defining units may also realize at least part of the functionality for defining an anchored frame as outlined in accordance with the previous embodiments. The client frame defining units and the server frame defining unit may be realized using sequences of coded instructions for execution on a processing unit and/or may at least partially be realized in hardware.

During operations, the server may execute the text processing application and processing results, i.e., pages including anchored frames etc. may be displayed at the client units. For example, the server unit 1710 may execute the relevant operations for determining a page text flow direction and page line growth direction of a page, for locating an anchored frame at a text origin and for defining a frame growth direction of the anchored frame to be oriented away from the anchor point. Further, the server unit 1710 may be arranged to perform further operations outlined with regard to previous embodiments.

It is noted that a program or a group of programs may be provided having instructions adapted to cause a group of data processing devices such as the client units and the server unit to carry out at least one of the above operations of the present and/or previous embodiments. Further, a computer readable medium may be provided, in which a program is embodied, where the program is to make a computer execute the method of the above operation.

Also, a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

It is noted that even if the operations of previous embodiments were shown and described in specific sequences and combinations, the operations particularly of Figs. 1, 3, 5, 7, 9, 11, 12, 13 and 14 may be combined in arbitrary ways in further embodiments.

In the following elements of a further embodiment of a processing unit will be described.

A processing unit for defining an anchored frame in a page having text information may have the following configuration.

1) A processing unit for defining an anchored frame in a page having text information including

a code section having instructions adapted to determine a page text flow direction of the page and a page line growth direction of the page;

a code section having instructions adapted to locate an anchor point of the anchored frame at an intersection of the page text flow direction and the page line growth direction of the page; and

a code section having instructions adapted to define a frame growth direction of the anchored frame to be oriented away from the anchor point.

2) The processing unit 1) including a code section having instructions adapted to determine whether the page text flow direction of the page and a frame text flow direction of the anchored frame are orthogonal to one another, and, in this case, a code section having instructions adapted to define the frame growth direction of the anchored frame to have the same direction as the page text flow direction of the page.

3). Processing unit of one of 1) including a code section having instructions adapted to determine whether the page text flow direction of the page and a frame text flow direction of the anchored frame are opposite to one another, and, in this case, a code section having instructions adapted to define the frame growth direction of the anchored frame to have the same direction as the page line growth direction of the page.

4) Processing unit of 1) including a code section having instructions adapted to locate the anchor point at a text origin of the page linked with the anchored frame.

5) Processing unit of 4) including

a code section having instructions adapted to determine a new location of the anchor point based on a new page text flow direction and new text growth direction of the page, if at least one of the page text flow direction and page line growth direction of the page is changed; and

a code section having instructions adapted to reposition the anchor point to the new location.

6) Processing unit of 8) including

a code section having instructions adapted to determine an anchor corner of the anchored frame located closest to the anchor point;

a code section having instructions adapted to define a distance X1-distance from the anchor point to the anchor corner in page text flow direction of the page; and

a code section having instructions adapted to position the anchor corner of the anchored frame in the distance X1-distance to the repositioned anchor point in the new page text flow direction of the page.

7) Processing unit of one of 5) and 6), including

a code section having instructions adapted to determine an anchor corner from the anchor point located closest to the anchor point;

a code section having instructions adapted to define a distance Y1-distance of the anchored frame to the anchor corner in page line growth direction of the page; and

a code section having instructions adapted to position the anchor corner of the anchored frame in the distance Y1-distance to the repositioned anchor point in the new page line growth direction of the page.

8) Processing unit of one of 5) to 7) including

a code section having instructions adapted to define a fixed position of the anchored frame based on one of the page text flow direction and the page line growth direction; and
a code section having instructions adapted to redefine the fixed position based on the new page text flow direction and the new page line growth direction.

9) Processing unit of 1) including a code section having instructions adapted to, if at least one of the page text flow direction and page line growth direction of the page is changed, maintain unchanged at least one of

- a height dimension;
- a width dimension; and
- a frame growth direction of the anchored frame.

10) Processing unit of one of 5) to 9) including a code section having instructions adapted to determine whether the frame growth direction of the anchored frame is opposite to at least one of the new page text flow direction of the page and the new page line growth direction of the page and a code section having instructions adapted to, in this case, reverse the frame growth direction.

11) Processing unit of 1) including a code section having instructions adapted to, if the text flow direction of the anchored frame is changed, maintaining unchanged at least one of

- a height dimension;
- a width dimension; and
- a frame growth direction of the anchored frame.

12) Processing unit of 1) including

a code section having instructions adapted to specify a new frame text flow direction of the anchored frame and a new frame growth direction of the anchored frame, if the text flow direction of the anchored frame is changed; and

a code section having instructions adapted to determine whether the new frame growth direction of the anchored frame is opposite to at least one of the page text flow direction and the page line growth direction of the page and a code section having instructions adapted to, in this case, reverse the frame growth direction.

13) Processing unit of 1) including

a code section having instructions adapted to determine a text origin of the second page, if a frame grows over a page limit into a second page;

a code section having instructions adapted to position a second anchor point at the text origin of the second page; and

a code section having instructions adapted to move the anchored frame to the second page.

14) Processing unit of 13) including

a code section having instructions adapted to determine if the distance Y1-distance exceeds a page limit of a first page, and to calculate a distance Y2-distance by subtracting from the distance Y1-distance the distance from the anchor point on the first page to the page limit of the first page;

a code section having instructions adapted to position a second anchor point on a second page such that an offset from a text origin in a page text flow direction on the second page corresponds to the offset of the first anchor point from a text origin in a page text flow direction on the first page and such that there is substantially no offset from the text origin in a page line growth direction on the second page; and

a code section having instructions adapted to locate the anchored frame in the distance X1-distance from the second anchor point in a page text flow direction of the second page and the Y2-distance from the second anchor point in a page line growth direction of the second page.

15) Processing unit of one of 13) and 14) including

a code section having instructions adapted to determine if the anchored frame grows over a page limit of a first page in page line growth direction,

a code section having instructions adapted to position a second anchor point on a second page such that an offset from a text origin in a page text flow direction on the second page corresponds to the offset of the first anchor point from a text origin in a page text flow direction on the first page and with substantially no offset from the text origin in a page line growth direction on the second page; and

a code section having instructions adapted to locate a remainder of the anchored frame exceeding the first page in the distance X1-distanc from the second anchor point in a page text flow direction of the second page and a distance of substantially zero from the second anchor point in a page line growth direction of the second page.

16) Processing unit of 1) including a code section having instructions adapted to determine the page text flow direction and the page line growth direction by the text flow direction and the line growth direction of one of the page, a paragraph, and a character string of the page linked with the anchored frame.

17) Processing unit of 1) including a code section having instructions adapted to make the anchored frame inherit at least one of the page text flow direction and the page line growth direction from the page.

**Claims**

**1.** Method of defining an anchored frame in a page having text information, including

determining a page text flow direction of the page;

determining a page line growth direction of the page;

locating an anchor point of the anchored frame at an intersection of the page text flow direction and the page line growth direction of the page; and

defining a frame growth direction of the anchored frame to be oriented away from the anchor point.

2. Method of claim 1, wherein the frame growth direction includes at least one of a frame text flow direction and a frame line growth direction.

3. Method of claim 1 or 2, including determining whether the page text flow direction of the page and a frame text flow direction of the anchored frame are orthogonal to one another, and, in this case, defining the frame growth direction of the anchored frame to have the same direction as the page text flow direction of the page.

4. Method of one of the claims 1 to 3, including determining whether the page text flow direction of the page and a frame text flow direction of the anchored frame are opposite to one another, and, in this case, defining the frame growth direction of the anchored frame to have the same direction as the page line growth direction of the page.

5. Method of one of the claims 1 to 4, including locating the anchor point at a text origin of the page linked with the anchored frame.

6. Method of claim 5, including, if at least one of the page text flow direction and page line growth direction of the page is changed,

determining a new location of the anchor point based on a new page text flow direction and new text growth direction of the page; and

repositioning the anchor point to the new location.

7. Method of claim 6, including

determining an anchor corner of the anchored frame located closest to the anchor point;

defining a distance X1-distance from the anchor point to the anchor corner in page text flow direction of the page; and

positioning the anchor corner of the anchored frame in the distance X1-distance to the repositioned anchor point in the new page text flow direction of the page.

8. Method of one of claims 6 or 7, including

determining an anchor corner of the anchored frame located closest to the anchor point;

defining a distance Y1-distance from the anchor point to the anchor corner in page line growth direction of the page; and

positioning the anchor corner of the anchored frame in the distance Y1-distance to the repositioned anchor point in the new page line growth direction of the page.

9. Method of one of claims 6 to 8, including

defining a fixed position of the anchored frame based on one of the page text flow direction and the page line growth direction; and

redefining the fixed position based on the new page text flow direction and the new page line growth direction.

**10.** Method of one of the claims 1 to 9, including, if at least one of the page text flow direction and page line growth direction of the page is changed, maintaining unchanged at least one of

- a height dimension;
- a width dimension; and
- a frame growth direction of the anchored frame.

**11.** Method of one of the claims 6 to 10, including determining whether the frame growth direction of the anchored frame is opposite to at least one of the new page text flow direction of the page and the new page line growth direction of the page and, in this case, reversing the frame growth direction.

**12.** Method of one of the claims 1 to 11, including, if the text flow direction of the anchored frame is changed, maintaining unchanged at least one of

- a height dimension;
- a width dimension; and
- a frame growth direction of the anchored frame.

**13.** Method of one of the claims 1 to 12, including, if the text flow direction of the anchored frame is changed,

specifying a new frame text flow direction of the anchored frame and a new frame growth direction of the anchored frame; and

determining whether the new frame growth direction of the anchored frame is opposite to at least one of the page text flow direction and the page line growth direction of the page and, in this case, reversing the frame growth direction.

**14.** Method of one of the claims 1 to 13, including,

if the distance Y1-distance exceeds a page limit of a first page, calculating a distance Y2-distance by subtracting from the distance Y1-distance the distance from the anchor point on the first page to the page limit of the first page;

positioning a second anchor point on a second page such that an offset from a text origin in a page text flow direction on the second page corresponds to the offset of the first anchor point from a text origin in a page text flow direction on the first page and such that there is substantially no offset from the text origin in a page line growth direction on the second page; and

locating the anchored frame in the distance X1-distance from the second anchor point in a page text flow direction of the second page and the Y2-distance from the second anchor point in a page line growth direction of the second page.

**15.** Method of one of the claims 1 to 14, including, if the anchored frame grows over a page limit of a first page in page line growth direction,

positioning a second anchor point on a second page such that an offset from a text origin in a page text flow direction on the second page corresponds to the offset of the first anchor point from a text origin in a page text flow direction on the first page and with substantially no offset from the text origin in a page line growth direction on the second page; and

locating a remainder of the anchored frame exceeding the first page in the distance X1-distance from the second anchor point in a page text flow direction of the second page and a distance of substantially zero from the second anchor point in a page line growth direction of the second page.

**16.** Method of claim 14, including

determining a current width of the anchored frame in. page text flow direction of the page;

determining a current height of the anchored frame in page line growth direction; and

positioning the anchored frame on the second page with the current width in text flow direction of the second page and the current height in line growth direction of the second page.

17. Method of one of the claims 1 to 16, wherein the page text flow direction and the page line growth direction is determined by the text flow direction and the line growth direction of one of the page, a paragraph, and a character string of the page linked with the anchored frame.

18. Method of one of the claims 1 to 17, wherein the anchored frame inherits at least one of the page text flow direction and the page line growth direction from the page.

19. Method of one of the claims 1 to 18, wherein the page is constituted by one of an anchored frame, a paragraph, and a character.

20. A program having instructions adapted to cause data processing means to carry out the method of at least one of the claims 1 - 19.

21. A computer readable medium, in which a program is embodied, where the program is to make a computer execute the method of at least one of the claims 1 - 19.

22. A computer program product comprising the computer readable medium according to claim 21.

23. Processing unit for defining an anchored frame in a page having text information, including

means for determining a page text flow direction of the page and a page line growth direction of the page;

means for locating an anchor point of the anchored frame at an intersection of the page text flow direction and the page line growth direction of the page; and

means for defining a frame growth direction of the anchored frame to be oriented away from the anchor point.

24. Processing unit of claim 23, wherein the frame growth direction includes at least one of a frame text flow direction and a frame line growth direction.

25. Processing unit of claim 23 or 24, including means for determining whether the page text flow direction of the page and a frame text flow direction of the anchored frame are orthogonal to one another, and, in this case, defining the frame growth direction of the anchored frame to have the same direction as the page text flow direction of the page.

26. Processing unit of one of the claims 23 to 26, including means for determining whether the page text flow direction of the page and a frame text flow direction of the anchored frame are opposite to one another, and, in this case, defining the frame growth direction of the anchored frame to have the same direction as the page line growth direction of the page.

27. Processing unit of one of the claims 23 to 26, including means for locating the anchor point at a text origin of the page linked with the anchored frame.

28. Processing unit of claim 27, including means for

determining a new location of the anchor point based on a new page text flow direction and new text growth direction of the page, if at least one of the page text flow direction and page line growth direction of the page is changed; and

means for repositioning the anchor point to the new location.

29. Processing unit of claim 28, including

means for determining an anchor corner of the anchored frame located closest to the anchor point;

means for defining a distance X1-distance from the anchor point to the anchor corner in page text flow direction of the page; and

means for positioning the anchor corner of the anchored frame in the distance X1-distance to the repositioned anchor point in the new page text flow direction of the page.

**30.** Processing unit of one of claims 28 or 29, including

means for determining an anchor corner from the anchor point located closest to the anchor point;

means for defining a distance Y1-distance of the anchored frame to the anchor corner in page line growth direction of the page; and

means for positioning the anchor corner of the anchored frame in the distance Y1-distance to the repositioned anchor point in the new page line growth direction of the page.

**31.** Processing unit of one of claims 28 to 30, including

means for defining a fixed position of the anchored frame based on one of the page text flow direction and the page line growth direction; and

means for redefining the fixed position based on the new page text flow direction and the new page line growth direction.

**32.** Processing unit of one of the claims 23 to 31, including, if at least one of the page text flow direction and page line growth direction of the page is changed, maintaining unchanged at least one of

- a height dimension;
- a width dimension; and
- a frame growth direction of the anchored frame.

**33.** Processing unit of one of the claims 28 to 32, including means for determining whether the frame growth direction of the anchored frame is opposite to at least one of the new page text flow direction of the page and the new page line growth direction of the page and, in this case, reversing the frame growth direction.

**34.** Processing unit of one of the claims 23 to 33, including, if the text flow direction of the anchored frame is changed, maintaining unchanged at least one of

- a height dimension;
- a width dimension; and
- a frame growth direction of the anchored frame.

**35.** Processing unit of one of the claims 23 to 34, including means for

specifying a new frame text flow direction of the anchored frame and a new frame growth direction of the anchored frame, if the text flow direction of the anchored frame is changed; and

means for determining whether the new frame growth direction of the anchored frame is opposite to at least one of the page text flow direction and the page line growth direction of the page and, in this case, reversing the frame growth direction.

**36.** Processing unit of one of the claims 23 to 35, including

means for determining if the distance Y1-distance exceeds a page limit of a first page, and for calculating a distance Y2-distance by subtracting from the distance Y1-distance the distance from the anchor point on the first page to the page limit of the first page;

means for positioning a second anchor point on a second page such that an offset from a text origin in a page text flow direction on the second page corresponds to the offset of the first anchor point from a text origin in a page text flow direction on the first page and with substantially no offset from the text origin in a page line growth direction on the second page; and

means for locating the anchored frame in the distance X1-distance from the second anchor point in a page text flow direction of the second page and the Y2-distance from the second anchor point in a page line growth direction of the second page.

**37.** Processing unit of claim 36, including,

means for determining if the anchored frame grows over a page limit of a first page in page line growth direction,

means for positioning a second anchor point on a second page such that an offset from a text origin in a page text flow direction on the second page corresponds to the offset of the first anchor point from a text origin in a page text flow direction on the first page and with substantially no offset from the text origin in a page line growth direction on the second page; and

means for locating a remainder of the anchored frame exceeding the first page in the distance X1-distance from the second anchor point in a page text flow direction of the second page and a distance of substantially zero from the second anchor point in a page line growth direction of the second page.

**38.** Processing unit of claim 36, including

means for determining a current width of the anchored frame in page text flow direction of the page;

means for determining a current height of the anchored frame in page line growth direction; and

means for positioning the anchored frame on the second page with the current width in text flow direction of the second page and the current height in line growth direction of the second page.

**39.** Processing unit of one of the claims 23 to 38, wherein the page text flow direction and the page line growth direction is determined by the text flow direction and the line growth direction of one of the page, a paragraph, and a character string of the page linked with the anchored frame.

**40.** Processing unit of one of the claims 23 to 39, wherein the anchored frame is arranged to inherit at least one of the page text flow direction and the page line growth direction from the page.

**41.** Processing unit of one of the claims 23 to 40, wherein the page is constituted by one of an anchored frame, a paragraph, and a character.

**42.** A data structure having instructions adapted to cause data processing means to carry out the method of at least one of the claims 1 - 19.

**43.** A data stream having instructions adapted to cause data processing means to carry out the method of at least one of the claims 1 - 19.

START

DETERMINE A PAGE TEXT FLOW
DIRECTION OF A PAGE                    101

DETERMINE A PAGE LINE GROWTH
DIRECTION OF THE PAGE                  102

LOCATE AN ANCHOR POINT OF THE
ANCHORED FRAME AT AN
INTERSECTION OF THE PAGE TEXT          103
FLOW DIRECTION AND THE PAGE LINE
GROWTH DIRECTION OF THE PAGE

DEFINE A FRAME GROWTH DIRECTION
OF THE ANCHORED FRAME TO BE            104
ORIENTED AWAY FROM THE ANCHOR
POINT

A

END

# Fig. 1

# Fig. 2a

# Fig. 2b

Ⓐ

300

DETERMINE TEXT FLOW DIRECTION
OF THE ANCHORED FRAME AND
PAGE

301

TEXT FLOW
DIRECTION OF PAGE AND
ANCHORED FRAME
VERTICAL ?

NO → Ⓑ

YES

302

DEFINE THE FRAME GROWTH
DIRECTION OF THE ANCHORED FRAME
TO BE PARALLEL TO THE PAGE TEXT
FLOW DIRECTION OF THE PAGE.

303

DEFAULT FRAME GROWTH
DIRECTION

END

# Fig. 3

410

AP 413 — 411 →

FLG 415 ←

PLG 412

416

FG 417

414

# Fig. 4a

420

AP 423 — 421 →

FLG 425 →

PLG 422

426

FG 427

424

# Fig. 4b

Fig. 4c

Fig. 4d

Fig. 4e

Fig. 4f

Fig. 4g

Fig. 4h

A/B

DETERMINE TEXT FLOW DIRECTION
OF THE ANCHORED FRAME                  501

TEXT FLOW
DIRECTION OF PAGE AND          NO
ANCHORED FRAME
ANTI-PARALLEL ?                        502

YES

DEFINE THE FRAME GROWTH
DIRECTION OF THE ANCHORED FRAME        503          DEFAULT FRAME GROWTH        504
TO BE PARALLEL TO THE PAGE GROWTH                   DIRECTION
DIRECTION OF THE PAGE

END

Fig. 5

610                                                           620

AP    612                                     622    AP
611                                                  621

615                                           625

FLG 616                                       FLG 626

PLG 612                                       PLG 623

614                                           624

FG 617                                        FG 627

Fig. 6a                    Fig. 6b

START

DETERMINE TEXT ORIGIN OF THE PAGE/
INTERSECTION OF PAGE LINE GROWTH
DIRECTION AND PAGE TEXT FLOW
DIRECTION ⟋701

LOCATE ANCHOR POINT OF THE
ANCHORED FRAME AT DETERMINED
POINT ⟋702

TEXT FLOW
DIRECTION AND/OR LINE
GROWTH DIRECTION OF
PAGE CHANGED
? ⟋703   NO

YES   ⓒ

DETERMINE A NEW LOCATION OF THE
ANCHOR POINT BASED ON A NEW PAGE
TEXT FLOW DIRECTION AND/OR NEW
PAGE LINE GROWTH DIRECTION ⟋704

REPOSITION THE ANCHOR POINT TO
THE NEW LOCATION ⟋705

END

Fig. 7

Fig. 8

Fig. 9

Fig. 10

Ⓒ

GROWTH
DIRECTION OF ANCHORED FRAME
ANTIPARALLEL TO NEW PAGE TEXT
FLOW AND/OR NEW PAGE LINE
GROWTH DIRECTION ?          1101

NO

YES

REVERSE FRAME GROWTH DIRECTION          1102

END

Fig. 11

Ⓐ

TEXT FLOW
DIRECTION OF THE
ANCHORED FRAME
CHANGED ?          1201

NO

YES

SPECIFY NEW FRAME TEXT FLOW
DIRECTION OF THE ANCHORED FRAME
AND/OR NEW FRAME GROWTH
DIRECTION OF THE ANCHORED FRAME          1202

NEW FRAME GROWTH
DIRECTION ANTIPARALLEL TO
PAGE TEXT DIRECTION AND/OR
THE PAGE LINE GROWTH
DIRECTION ?          1203

NO

YES

REVERSE FRAME GROWTH DIRECTION          1204

END

Fig. 12

(A)

1301
Y1-DISTANCE EXCEEDS PAGE LIMIT ? — NO

YES

1302
Y2-DISTANCE = Y1-DISTANCE - DISTANCE(ANCHOR POINT TO PAGE LIMIT OF FIRST PAGE)

1303
DETERMINE POSITION OF A SECOND ANCHOR POINT ON A SECOND PAGE SUCH THAT AN OFFSET FROM A TEXT ORIGIN IN A PAGE TEXT FLOW DIRECTION ON THE SECOND PAGE IS EQUAL TO THE OFFSET OF THE FIRST ANCHOR POINT FROM A TEXT ORIGIN IN A PAGE TEXT FLOW DIRECTION ON THE FIRST PAGE AND FURTHER SUCH THAT AN OFFSET FROM THE TEXT ORIGIN IN A PAGE LINE GROWTH DIRECTION ON THE SECOND PAGE IS ZERO

1304
RELOCATE ANCHORED FRAME TO THE SECOND PAGE IN THE DISTANCE X1-DISTANCE FROM THE SECOND ANCHOR POINT IN A PAGE TEXT FLOW DIRECTION OF THE SECOND PAGE AND THE Y2-DISTANCE, CALCULATED IN OPERATION 1302, FROM THE SECOND ANCHOR POINT IN A PAGE LINE GROWTH DIRECTION OF THE SECOND PAGE

(C)

END

Fig. 13

(C)

1401
DETERMINE A CURRENT WIDTH OF THE ANCHORED FRAME IN PAGE TEXT FLOW DIRECTION OF THE PAGE

1402
DETERMINE A CURRENT HEIGHT OF THE ANCHORED FRAME IN PAGE LINE GROWTH DIRECTION

1403
POSITION THE ANCHORED FRAME ON THE SECOND PAGE WITH THE CURRENT WIDTH IN TEXT FLOW DIRECTION OF THE SECOND PAGE AND THE CURRENT HEIGHT IN LINE GROWTH DIRECTION OF THE SECOND PAGE.

END

Fig. 14

Fig. 15

(A)

1301

ANCHORED FRAME GROWS
OVER A PAGE LIMIT ?

NO

YES

1302

POSITION A SECOND ANCHOR POINT ON
A SECOND PAGE SUCH THAT AN OFFSET
FROM A TEXT ORIGIN IN A PAGE TEXT
FLOW DIRECTION ON THE SECOND
PAGE IS EQUAL TO THE OFFSET OF THE
FIRST ANCHOR POINT FROM A TEXT
ORIGIN IN A PAGE TEXT FLOW
DIRECTION ON THE FIRST PAGE AND
SUCH THAT AN OFFSET FROM THE TEXT
ORIGIN IN A PAGE LINE GROWTH
DIRECTION ON THE SECOND PAGE IS
EQUAL TO ZERO.

1303

LOCATE REMAINDER OF THE ANCHORED
FRAME EXCEEDING THE FIRST PAGE IN
THE DISTANCE X1-DISTANCE FROM THE
SECOND ANCHOR POINT IN A PAGE TEXT
FLOW DIRECTION OF THE SECOND PAGE
AND A DISTANCE OF ZERO FROM THE
SECOND ANCHOR POINT IN A PAGE LINE
GROWTH DIRECTION OF THE SECOND
PAGE

(C)

END

Fig. 16

1730

1720

CLIENT FRAME
DEFINING UNIT
1721

CLIENT FRAME
DEFINING UNIT
1731

INTERNET

1740

1730

SERVER

SERVER FRAME
DEFINING UNIT

1711

Fig. 17

European Patent
Office

**EUROPEAN SEARCH REPORT**

Application Number

EP 02 01 9106

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | M. ERDENECHIMEG, R. MOORE: "Multi-directional Multi-lingual Script Processing (Technical Report 75, UNU/IIST)" PROCEEDINGS OF THE SEVENTEENTH INTERNATIONAL CONFERENCE ON THE COMPUTER PROCESSING OF ORIENTAL LANGUAGES, 2 - 4 April 1997, XP002242625 Hong-Kong * page 5, paragraph 4 * * page 6, paragraph 2 - page 9, paragraph 4 * * page 10, paragraph 3 - paragraph 6 * * page 14, paragraph 6 - page 16; figure 10 * | 1-43 | G06F17/21 |
| X | US 5 182 709 A (MAKUS PETER M) 26 January 1993 (1993-01-26)  * column 3, line 56 - column 4, line 52 * * column 8, line 15 - column 9, line 35 * * column 10, line 37 - line 63 * * column 15, line 38 - column 18, line 55 * * column 23, line 54 - column 16, line 34 * * column 29, line 42 - line 46 * * column 31, line 10 - column 32, line 5 * * column 58, line 1 - line 44 * | 1,2, 20-24, 42,43 | |
| A | * the whole document * | 3-19, 25-41 | TECHNICAL FIELDS SEARCHED (Int.Cl.7)  G06F |
| A | Z. BECKER AND D.M. BERRY: "triroff, an Adaptation of the Device-Independent troff for Formatting Tri-Directional Text" ELECTRONIC PUBLISHING, 2(3), 1990, pages 119-142, XP002242626 * page 125 - page 133 * | 1-43 | |

The present search report has been drawn up for all claims

| Place of search | Date of completion of the search | Examiner |
|---|---|---|
| THE HAGUE | 27 May 2003 | Díaz de Lezana, C |

**EP 1 394 690 A1**

### ANNEX TO THE EUROPEAN SEARCH REPORT
### ON EUROPEAN PATENT APPLICATION NO.

EP 02 01 9106

27-05-2003

| Patent document cited in search report | Publication date | Patent family member(s) | | Publication date |
|---|---|---|---|---|
| US 5182709 A | 26-01-1993 | AU | 597320 B2 | 31-05-1990 |
| | | AU | 6644086 A | 08-10-1987 |
| | | CA | 1272293 A1 | 31-07-1990 |
| | | DE | 3784088 D1 | 25-03-1993 |
| | | DE | 3784088 T2 | 02-09-1993 |
| | | EP | 0240909 A2 | 14-10-1987 |
| | | JP | 62250481 A | 31-10-1987 |